(19) Europäisches Patentamt

European Patent Office

Office européen des brevets

(11) **EP 1 708 460 A1**

(12) **EUROPEAN PATENT APPLICATION**

(43) Date of publication:
**04.10.2006 Bulletin 2006/40**

(51) Int Cl.:
**H04L 29/08** (2006.01)

(21) Application number: **06006184.3**

(22) Date of filing: **24.03.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Lagree, James L.**<br>**Robinson Twp**<br>**PA 15136 (US)**<br>• **Kevin Lynn Parker**<br>**Pittsburg**<br>**PA 15217 (US)**<br>• **Saletta, Gary F.**<br>**Irwin**<br>**PA 15652 (US)** |
| (30) Priority: **29.03.2005 US 91979** | |
| (71) Applicant: **Eaton Corporation**<br>**Cleveland, Ohio 44114-2584 (US)** | • **Schaefer, David J.**<br>**Beaver Falls**<br>**PA 15010 (US)** |
| (72) Inventors:<br>• **Engel, Joseph Charles**<br>**Monroeville**<br>**PA 15146 (US)**<br>• **Hosko, Daniel A.**<br>**Pittsburgh**<br>**PA 15205 (US)** | • **Schlotterer, John C.**<br>**Murrysville**<br>**PA 15668 (US)**<br><br>(74) Representative: **Geyer, Ulrich F.**<br>**WAGNER & GEYER,**<br>**Patentanwälte,**<br>**Gewürzmühlstrasse 5**<br>**80538 München (DE)** |

(54) **Self-learning server communicating values from a plurality of communicating devices of one communication network to a client of another communication network**

(57)    A system (33) includes a first communication network, such as the Internet (16), having a client (18; 20); a second INCOM communication network (14) including a plurality of communicating devices (4,6,8,10,12,32); and a server (2). The server (2) includes a first Ethernet transceiver (106) communicating with the Internet (16), a second INCOM transceiver (104) communicating with the INCOM communication network (14) and the communicating devices (4,6,8,10,12,32), and a processor (102) cooperating with the first and second transceivers. The processor being adapted to learn (34) at least some of the communicating devices, to periodically obtain (36) a plurality of values (274) from the communicating devices, to associate (42) the values with a web page (22;24), to communicate (156) the web page to the client (18;20) over the Internet, and to periodically communicate (156) the values associated with the web page to the client over the Internet.

FIG.1

**Description**

BACKGROUND OF THE INVENTION

Field of the Invention

The invention pertains generally to communication networks and, more particularly, to a server adapted to communicate with multiple communication networks and communicating devices. The invention also pertains to a system employing a server and multiple communication networks and communicating devices.

Background Information

Modem circuit breakers and other electrical distribution components employ embedded microprocessors and communications to provide remote monitoring of the condition of the electrical system. See, for example, U.S. Patent Nos. 4,644,547; 4,644,566; 4,653,073; 5,315,531; 5,548,523; 5,627,716; 5,815,364; and 6,055,145.

It is known to provide communications from modem circuit breakers and other electrical distribution components via a twisted pair communication bus that is driven by a local personal computer (PC) type of master that provides, in turn, communications upward to other PCs in a client/server architecture. The clients include custom graphics software that allow the information provided by the various components to be graphically presented.

The INCOM (INdustrial COMmunications) Network provides two-way communication between an INCOM network master and a variety of devices such as, for example, electrical interrupting devices, circuit breakers, digital meters, motor overload relays, monitoring units and a wide range of industrial and electrical distribution products. Control and monitoring is carried out over a communication network consisting of dedicated twisted pair wires. Preferably, a suitable circuit provides a simple, low-cost interface to the communication network. For example, a Sure Chip Plus™ microcontroller, mixed-mode analog-digital application specific integrated circuit (ASIC) that includes a microprocessor, enables the control, protection or monitoring device to communicate with the INCOM network. This integrated circuit provides various network functions such as, for example, carrier generation and detection, data modulation/demodulation, address decoding, and generation and checking of a 5-bit cyclic redundant BCH error code. Alternatively, suitable INCOM communicating ASICs may be employed such as, for example, an ASIC intended for use with an external microprocessor. INCOM may employ a wide range of modulation techniques and baud rates (*e.g.*, without limitation, FSK (9600 baud); base band (153.2 Kbaud)).

An INCOM communication module, which may be otherwise known as a PONI "Product Operated Network Interface," may act as an interface device between a remote personal computer PC and the electrical meter, protector or control communicating device that does not have a built-in INCOM transceiver.

The INCOM network employs a simple two-wire asynchronous communication line, which is daisy chained to the several devices. INCOM is a master-slave, multi-drop communication protocol based on transmission packets containing 25 bits of useful information. Additional framing and check bits are appended to assure reliable communication. A master device digitally addresses each of the slave devices in a master/slave relationship for the purpose of gathering the data generated by the individual units for central processing. An INCOM network can have one master and up to 1000 slaves. The INCOM communications protocol is based on 33-bit message packets. A typical INCOM network transaction consists of one or more 33-bit message packets transmitted by the master, and one or more 33-bit message packets transmitted by a slave in response.

Examples of the INCOM network and protocol are disclosed in U.S. Patent Nos. 4,644,547; 4,644,566; 4,653,073; 5,315,531; 5,548,523; 5,627,716; 5,815,364; and 6,055,145, which are incorporated by reference herein.

Any suitable computer or programmable device (*e.g.*, with an RS-232C communications port; PC XT/AT bus) may function as an INCOM network master. An RS-232C based INCOM network master employs a gateway device such as the MINT (Master INCOM Network Translator). The gateway device converts the 10 byte ASCII encoded hexadecimal RS-232C messages to or from 33-bit binary messages used on the INCOM local area network.

An IBM XT or AT compatible personal computer alternatively employs the CONI (Computer Operated Network Interface) for interfacing to the INCOM network. The CONI employs a direct PC-bus interface, which provides a more efficient network interface than that of the MINT.

There are two basic types of INCOM messages: control messages and data messages. The messages are 33 bits in length and are sent with the Least Significant Bit (LSB) first. An INCOM chip, for example, generates a number of the bits including the Start bits, Stop bit and BCH error detection code. The format for an INCOM-control message is shown in Table 1.

Table 1

| Bit Number(s) | Mnemonic | Definition |
| --- | --- | --- |
| 1-0 | STR | Start Bits = 11 |
| 2 | C/D | Control Bit = 1 for Control Messages |
| 6-3 | INST | Instruction Field |
| 10-7 | COMM | Command Field |
| 22-11 | ADDRESS | Address of Product (Slave Device) |
| 26-23 | SCOMM | SubCommand Field |
| 31-27 | BCH | BCH error detection field |
| 32 | STP | Stop Bit = 0 |

The format for an INCOM-Data message is shown in Table 2.

Table 2

| Bit Number(s) | Mnemonic | Definition |
| --- | --- | --- |
| 1-0 | STR | Start Bits = 11 |
| 2 | C/D | Control Bit = 0 for Data Messages |
| 10-3 | BYTE0 | 8-bit data field (Bit 3 = b0) |
| 18-11 | BYTE1 | 8-bit data field (Bit 11 = b0) |
| 26-19 | BYTE2 | 8-bit data field (Bit 18 = b0) |
| 31-27 | BCH | BCH error detection field |
| 32 | STP | Stop Bit = 0 |

There are two types of INCOM slave devices (products): a stand-alone slave, and an expanded mode slave. The stand-alone slave is a device on an INCOM network that can control one digital output and monitor up to two status (digital) inputs. An example of a stand-alone slave device is an addressable relay marketed by Eaton Electrical, Inc. of Pittsburgh, Pennsylvania. A stand-alone slave device uses INCOM control messages exclusively for communications.

The expanded mode slave is a device on an INCOM network that can send and/or receive data values over the INCOM network including, for example, analog and digital I/O data, configuration or setpoint information, and trip data. Examples of such devices include IQ Data Plus II Line Metering Systems, Digitrip RMS 700 and 800 Trip Units, and IQ 1000 and IQ 500 Motor Protection Systems, all marketed by Eaton Electrical, Inc. An expanded mode slave device uses INCOM control messages and INCOM data messages for communications.

All INCOM communication packets contain 3 bytes of message body and a control/data flag. The control/data flag determines the interpretation of the 3-byte message body (ignoring the two start bits of Tables 1 and 2) as follows. If the control/data flag (bit 0) (bit 2 of Tables 1 and 2) is set to 1 (control), then bits 1 through 24 (bits 3 through 26 of Table 1) of the message body are broken into the following fields: 4-bit Instruction (bits 1...4); 4-bit Command (bits 5... 8); 4-bit Subcommand (bits 21...24); and 12-bit Slave Address (bits 9...20). If the control/data flag is set to 0 (data), then bits 1 through 24 (bits 3 through 26 of Table 2) of the message body are interpreted as 3 bytes of data. Bit 1 is the least-significant bit of the first byte of data. Bit 24 is the most-significant bit of the third byte of data.

Bus arbitration is performed by both hardware and software protocols. The INCOM network is arbitrated by a modified token-passing scheme in which control of bus transmission rights is defined by the message type and contents. The arbitration protocol assumes a single network controller (network master) that is defined by system configuration. Multiple devices may be capable of performing the network master function, however, only one may be active at any given time. Each network slave is assigned a unique 12-bit network address that is used for device selection. Bus transmission rights are returned to the master after the slave has finished transmitting on the bus.

The network master has several mechanisms of distributing bus transmission rights. For example, the master sends a control message to a slave device that may or may not evoke a reply. If the instruction field did not request a reply, then bus transmission rights remain with the network master. If the message expects a reply or replies, then the master transmits an enable bus interface control message (instruction field equal to 3) that allows the slave device to transmit messages on the bus. A slave is not able to transmit a message without receiving such a control message. The slave may respond with as many messages as the software protocol desires. The slave's interface remains enabled until it receives a disable interface control message (instruction field equal to 2 or AH), or until it detects a control message to a different slave address. The software communication protocol determines when bus transmission rights are returned to the network master controller.

As shown in Table 3, below, various INCOM commands are sent by the master to obtain status and analog data from a slave device. All of these messages are sent with the Control/Data flag set to "Control" or 1. All (3 x x) series of control messages have an address that matches an INCOM slave address. If a sub-network master is used (*e.g.*, a sub-network master device such as a BIM (Breaker Interface Module)), then the "Process Sub-network Command" (3 D 1) is sent to the sub-network master.

Table 3

| Command | Function | Value(s) Obtained |
|---|---|---|
| (3 0 0) | Read Fast Status | Status |
| (3 0 5) | Read Current Buffer | IA through IX |
| (3 0 6) | Read Line-to-Line Voltage | VAB through VCA |
| (308) | Read Power Buffer (1) | Power |
| (3 0 9) | Read Power Buffer (2) | Power Factor |
| (3 0 A) | Read Energy Buffer | Energy |
| (3 0 F, N=42) | Read THD | THDA through THDC for Magnum breakers |
| (3 C F, N=01:01:01) | Read THD | THDA through THDC for Optim breakers |
| (3 D 1) | Process Sub-Network Command | |

U.S. Patent No. 5,805,442 discloses what is called a distributed interface that allows a remote computer to obtain information from a programmable logic controller (PLC) over the Internet, the information obtained from the PLC including both data and instructions as to how to display the data (the terminology "distributed interface" thus being used because at least some of the instructions for displaying data from PLCs are located at the PLCs, not at the remote computer, and communicated to the remote computer with the data to be displayed). The PLC disclosed therein incorporates a web server that responds to a request for data received over the Internet by providing the data as well as the instructions for displaying the data, the combination of data and display instructions residing on one or another PLC storage device as a so-called web page.

U.S. Patent No. 6,640,140 discloses a PLC including an interface to the Internet and a web server allowing a remote computer to access web pages maintained by the controller providing information relevant to the control function of the controller, such as control sensor readings and, optionally, information about the status of the control system. The web server is implemented as part of the controller.

There is room for improvement in servers and systems for multiple communication networks.

SUMMARY OF THE INVENTION

These needs and others are met by the present invention, which permits the remote graphical display of live data from control, protection or monitoring communicating devices, such as circuit breakers and other electrical distribution components, without the need for local, custom, personal computer-type master software and without the need for special custom graphics software at the remote location.

In accordance with one aspect of the invention, a server comprises: a first transceiver adapted to communicate with a first communication network; a second transceiver adapted to communicate with a second communication network including a plurality of communicating devices; and a processor cooperating with the first and second transceivers, the processor being adapted to learn at least some of the communicating devices of the second communication network, to repetitively obtain a plurality of values from the at least some of the communicating devices of the second communication network, to associate the values with a web page, to communicate the web page to a remote client over the first communication network, and to repetitively communicate the values associated with the web page to the remote client over the first communication network.

The processor may include a web server adapted to provide the web page and the values in a spreadsheet format to a web browser of the remote client.

The communicating devices may be selected from the group consisting of an electrical interrupting device, a digital meter, a motor overload relay, a monitoring unit and an electrical distribution product.

The processor may include a first routine adapted to accept a plurality of limits for at least some of the values, and a second routine adapted to compare each of the at least some of the values to a corresponding one of the limits in order to limit check the at least some of the values.

The processor may further include a third routine adapted to send an e-mail message over the first communication network responsive to a corresponding one of the at least some of the values traversing a corresponding one of the limits.

The processor may be adapted to provide the web page and the values in a spreadsheet format to the remote client. The processor may further include a third routine adapted to annunciate an alarm responsive to a corresponding one of the at least some of the values traversing a corresponding one of the limits or being equal to a predetermined state.

As another aspect of the invention, a system comprises: a first communication network including a client; a second communication network including a plurality of communicating devices; and a server comprising: a first transceiver communicating with the first communication network, a second transceiver communicating with the second communication network and the plurality of communicating devices, and a processor cooperating with the first and second transceivers, the processor being adapted to learn at least some of the communicating devices from the second communication network, to repetitively obtain a plurality of values from the at least some of the communicating devices of the second communication network, to associate the values with a web page, to communicate the web page to the client over the first communication network, and to repetitively communicate the values associated with the web page to the client over the first communication network.

The client may further include an application program. The web server may be adapted to output the values in a structured format to the application program.

BRIEF DESCRIPTION OF THE DRAWINGS

A full understanding of the invention can be gained from the following description of the preferred embodiments when read in conjunction with the accompanying drawings in which:

Figure 1 is a block diagram of a system in accordance with the present invention.
Figure 2 is a representation of a spreadsheet web page employed by the server and one of the clients of Figure 1.
Figure 3 is an isometric view of the server of Figure 1.
Figure 4 is a block diagram of the server of Figure 1.
Figure 5 is an isometric view of the server of Figure 1 including a power supply.
Figure 6 is a flowchart of an initialization procedure executed by the processor of Figure 4.
Figure 7 is a flowchart of a main loop procedure executed by the processor of Figure 4.
Figures 8A-8B form a flowchart of the auto-learn procedure of Figure 7.
Figure 9 is a representation of a configuration device list form employed by the server of Figure 1.
Figure 10 is a representation of a device configuration form employed by the server of Figure 1.
Figure 11 is a flowchart of the main network scan subroutine of Figure 7.

DESCRIPTION OF THE PREFERRED EMBODIMENTS

For convenience of disclosure, the following acronyms and/or terms are employed herein:

CGI: Common Gateway Interface—a specification for transferring information between a World Wide Web server and a CGI program. A CGI program is any program designed to accept and return data that conforms to the CGI specification. The CGI program may be written, for example, in any suitable programming language (*e.g.*, without limitation, C; Perl; Java; Visual Basic). CGI programs are a common way for Web servers to interact dynamically with users. Many HTML pages that contain forms, for example, use a CGI program to process the form's data after it is submitted. Another increasingly common way to provide dynamic feedback for Web users is to include scripts or programs that run on the user's machine rather than the Web server. These programs can be, for example, Java applets, Java scripts or ActiveX controls. These technologies are known collectively as client-side solutions, while the use of CGI is a server-side solution because the processing occurs on the Web server.

DHCP: Dynamic Host Configuration Protocol—a protocol for assigning dynamic IP addresses to devices on a network. With dynamic addressing, a device can have a different IP address every time it connects to the network. In some systems, the device's IP address can even change while it is still connected. DHCP also supports a mix of static and dynamic IP addresses. Dynamic addressing simplifies network administration because the software keeps track of IP addresses rather than requiring an administrator to manage the task. As a result, a new computer can be added to a communication network without the need to manually assign it a unique IP address.

Submission Forms are web pages with "fields" for a user to fill in with information. These forms collect and process information from a user visiting a Web site and allow them to interact with Web pages. Forms are written, for example, in HTML and are processed, for example, by CGI programs. The output can be sent, for example, as an e-mail form, be stored online, be printed and/or be returned to the user as an HTML page.

FTP: File Transfer Protocol—the protocol used on the Internet for exchanging files. FTP works in the same way as HTTP for transferring Web pages from a server to a user's web browser and SMTP for transferring electronic mail across the Internet in that, like these technologies, FTP uses the Internet's TCP/IP protocols to enable data transfer. FTP is commonly used to download a file from a server using the Internet or to upload a file to a server (*e.g.*, uploading a Web page file to a server).

IP: Internet Protocol—specifies the format of packets, also called datagrams, and the corresponding addressing scheme.

MAC address: Media Access Control address—a hardware address that uniquely identifies each node of a network. In IEEE 802 networks, for example, the Data Link Control (DLC) layer of the ISO/OSI Reference Model is divided into two sublayers: the Logical Link Control (LLC) layer and the Media Access Control (MAC) layer. The MAC layer interfaces directly with the network medium. Consequently, each different type of network medium employs a different MAC layer.

MAC layer: Media Access Control Layer—one of two sublayers that make up the Data Link Layer of the ISO/OSI model. The MAC layer is responsible for moving data packets to and from one network node to another node across a shared channel.

TCP/IP: Most networks combine IP with a higher-level protocol called Transmission Control Protocol (TCP) that establishes a virtual connection between a destination and a source.

URL: Uniform Resource Locator—the global address of documents and other resources on the World Wide Web. The first part of the address indicates what protocol to use, and the second part specifies the IP address or the domain name where the resource is located. For example, the two URLs ftp://www.pcwebopedia.com/stuff.exe and http://www.pcwebopedia.com/index.html point to two different files at the domain pcwebopedia.com. The first URL specifies an executable file that should be fetched using the FTP protocol, while the second URL specifies a Web page that should be fetched using the HTTP protocol.

WEB page is a document on the World Wide Web. Every Web page is identified by a unique URL.

(3 0 0): This shorthand notation is used to designate an INCOM control message's instruction, command and subcommand fields. It represents a message directed to a specific slave address in which the C/D flag is set to 'control' and whose address matches the slave's address to the extent needed by the instruction field. Certain instructions employ block (*e.g.*, least-significant address nibble is ignored) or global (*e.g.*, all address bits are ignored) address matching. The majority of the commands discussed herein are (3 x x) in which all 12-bits of address match. The three numbers are hexadecimal and are in the following order: (<instruction> <command> <subcommand>).

(3 0 F, N=xxxx): This shorthand notation is used to designate an INCOM transmit expanded buffer command (3 0 F) sequence. In this sequence, the master transmits a (3 0 F) control message to the slave. The slave returns an ACK to the master indicating that it is ready to accept the "N" parameter. The master then transmits "N" as a data message, wherein "N=" represents the 24-bit expanded buffer number.

(3 C F, N=xx:xx:xx): This shorthand notation is used to designate an INCOM transmit product-specific buffer command (3 C F) sequence. In this sequence, the master transmits a (3 C F) control message to the slave. The slave returns an ACK to the master indicating it is ready to accept the "N" parameter. The master then transmits "N" as a data message, wherein "N=" represents the 24-bit product-specific buffer number.

IMPACC 24-Bit Floating Point Number: a 24-bit hexadecimal number with bytes defined as follows: BYTE0 - low-order byte of the 16-bit magnitude; BYTE1 - high-order byte of the 16-bit magnitude; and BYTE2 — scale byte. The BYTE2 bit definitions are as follows: b7: 0 = the value BYTE0 and BYTE 1 is a 16-bit unsigned integer, 1 = the value in BYTE0 and BYTE 1 is a 16-bit signed integer; b6: 0 = the data is invalid, 1 = the data is valid; b5: 0 = the multiplier is a power of 2, 1 = the multiplier is a power of 10; and b4-b0: the muitipiier's exponent in 5-bit signed integer form.

As employed herein, the term "communication network" shall expressly include, but not be limited by, any local area network (LAN), wide area network (WAN), intranet, extranet, global communication network, wireless communication system or network, and/or the Internet, which may implement any suitable communication protocol (*e.g.*, without limitation, Integrated Monitoring, Protection, And Control Communication (IMPACC) protocol; INCOM; CH-Wire; Modbus; DeviceNet; Modbus RTU; Multilin marketed by General Electric; DataHighway Plus marketed by Allen-Bradley; BACnet marketed by Alerton Technologies, Inc.; Modbus RTU I/O modules marketed by Arco Mag).

The present invention is described in association with a server for an INCOM network and an INCOM sub-network, although the invention is applicable to a wide range of communication networks and sub-networks including more than one network and/or more than one sub-network simultaneously.

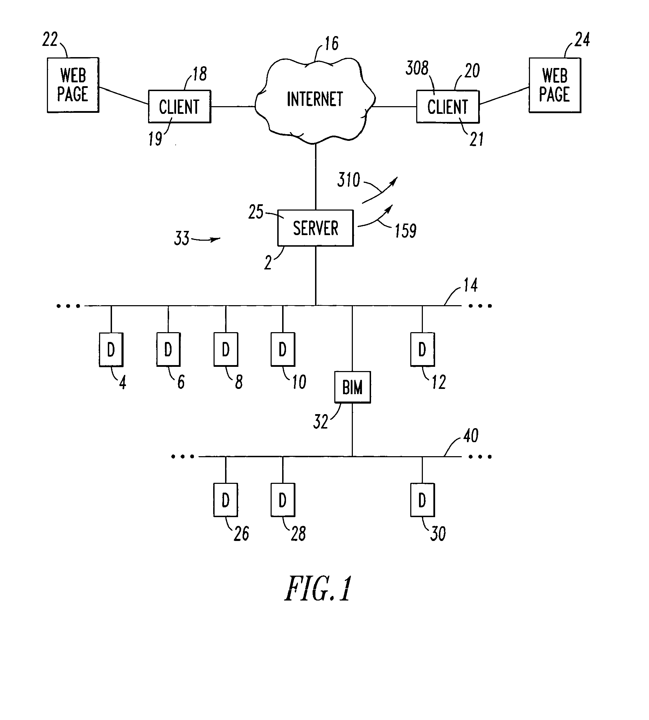

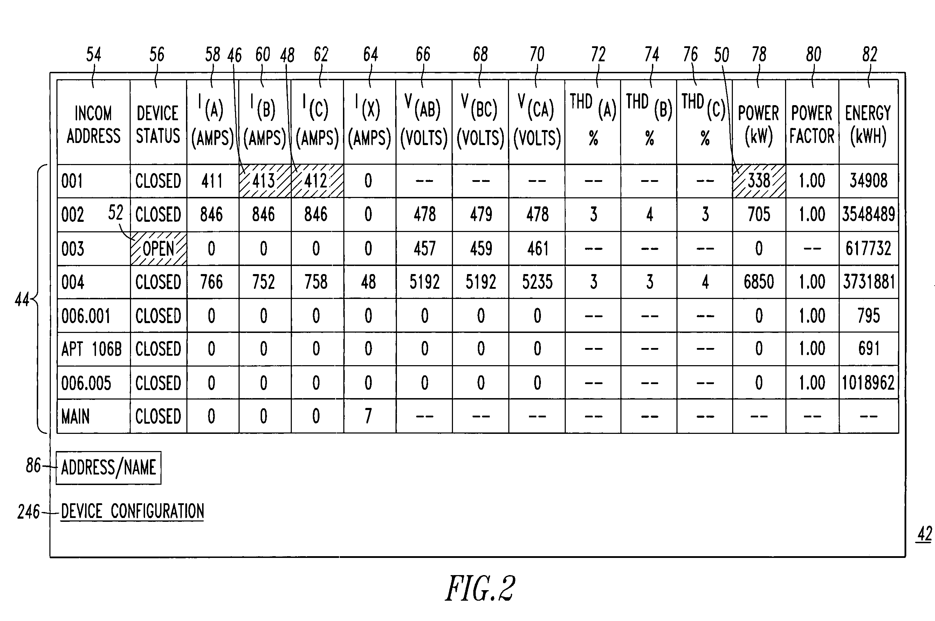

Referring to Figure 1, an Ethernet Viewer (eView) server 2 provides a relatively simple and low-cost microprocessor-based gateway to "web enable" various devices 4,6,8,10,12 (*e.g.*, without limitation, control, protection and/or monitoring electrical distribution devices within electrical gear) that communicate on a communication network (*e.g.*, without limitation, INCOM network 14) that is separate and distinct from another communication network, such as the Internet 16, as shown, or, for example, an Ethernet network. The INCOM network 14, for example, is the physical-level protocol used by the server 2 for communication. The server 2 is a master on and communicates with the INCOM network 14 at a suitable communication rate. A preamble, 5 cyclic redundancy check bits, and a stop bit are added to the message to form the message packet (as was discussed, above, in connection with Tables 1 and 2). The server 2 is a web-based server for use with remote browser-based clients, such as 18,20, and provides a single web communications interface for the various devices, such as 4,6,8,10,12. The server 2 serves metering and status information via web pages 22,24 to the respective browser-based clients 18,20. The server 2 communicates the web pages 22,24 to the web browsers 19,21 of the remote clients 18,20, respectively, over the Internet 16, and repetitively communicates (*e.g.*, without limitation, the rate (*e.g.*, without limitation, about every three seconds) at which data is requested is contained in the web pages 22,24; requests data based on the browser's refresh rate; a browser may initially be programmed not to refresh, but this is changed if automatic updates are desired) values associated with those web pages over the Internet 16. The web server 25 is adapted to provide those web pages 22,24 and values in a spreadsheet format, as is discussed below in connection with Figure 2, to the respective remote web browsers 19,21. The server 2 is preferably applied to relatively small systems and provides relatively simple Ethernet 10 Base T communications to as many as about twenty INCOM communicating devices. The server 2 includes a web server 25 that provides TCP/IP support of multiple clients, such as 18,20. In turn, real-time (*e.g.*, the INCOM network 14 is scanned as fast as possible; web pages are updated as often as requested by the client 18,20) data is sent to the corresponding client 18 or 20 and is displayed as part of the corresponding web page 22 or 24 containing, for example, HTML and JavaScript.

The server 2 is, also, a master on the INCOM network 14 that communicates with the INCOM-based slave devices 4,6,8,10,12.

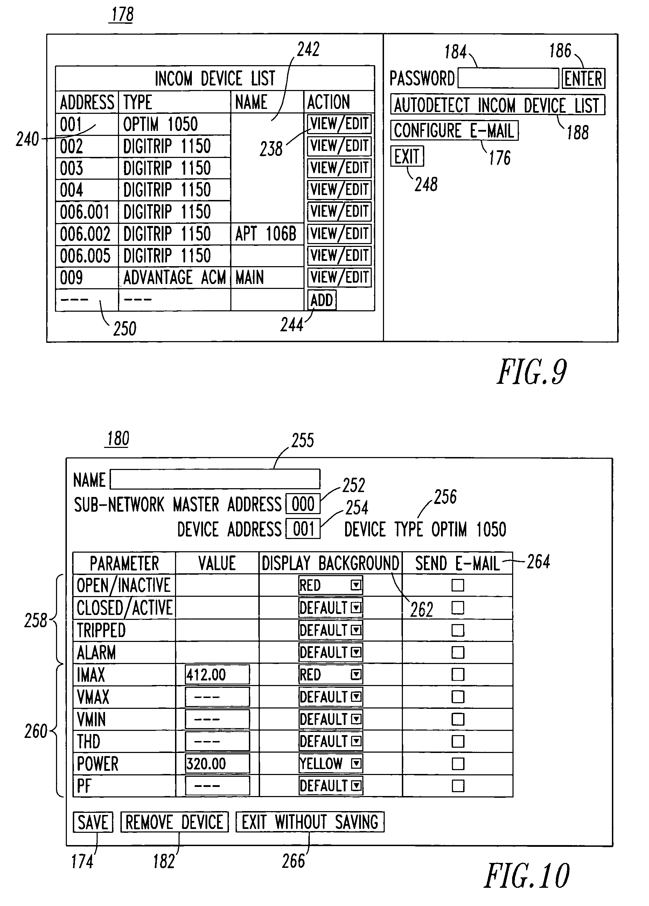

The server 2 preferably employs minimal programming and preferably works "out-of-the-box". On power-up, it auto-learns (Figures 8A-8B) the INCOM network 14 including devices 26,28,30 that are located below a sub-network master device such as, for example, the Breaker Interface Module (BIM) 32 or an Assembly Electronic Monitor (AEM) (not shown). If desired, the server 2 may be programmed to provide additional useful features, such as, for example, assignment of device labels and alarming with e-mail notification. The only required programming is relative to the IP addresses of the server 2, which addresses can be either manually or automatically (*e.g.*, via Dynamic Host Configuration Protocol (DHCP)) assigned. A system 33 includes the Internet (*e.g.*, Ethernet) 16, one or more of the clients 18,20, the INCOM network 14 and any corresponding communicating devices or sub-networks, and the server 2.

Although one INCOM network 14 and one INCOM sub-network 40 are shown, the invention and the server 2 may contemporaneously interface to more than one communication network and/or to more than one communication sub-network.

<u>Example 1</u>

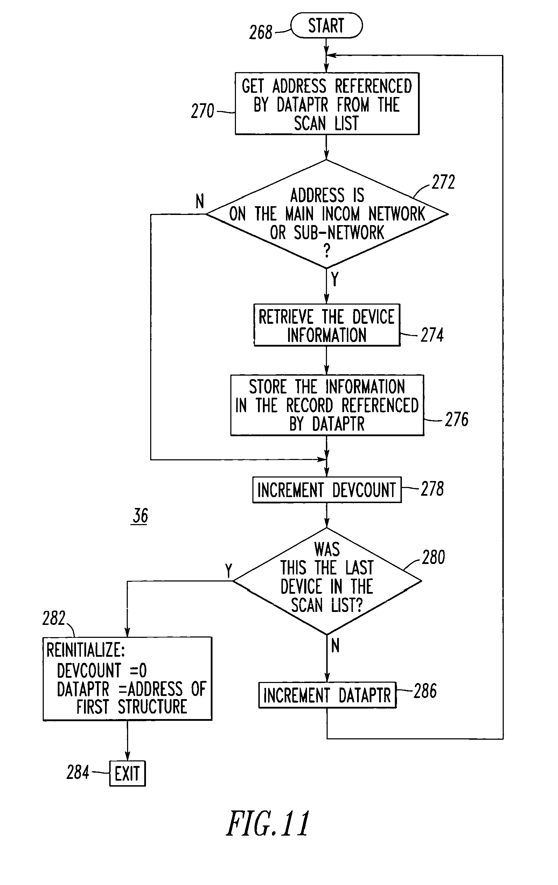

When the Read Status (3 0 0) command is sent by the server 2, the INCOM device, such as 4, responds with a single data message containing the following information. This command is used during an Auto Learning subroutine 34 (Figures 8A-8B) to determine that an INCOM device exists at the given location. This command is also used during the normal scan process 36 (Figure 11) to determine the device's status and device type.

The product code is a 16-bit number assigned to the device. The product code is contained in bits 1 through 16 of the response message (Message 1, Bytes 1 and 0) and is broken into three fields as follows: Class Code is contained in bits 1 through 6 of the response message (Message 1, Byte 0, Bits 5-0); Product ID is contained in bits 11 through 16 of the response message (Message 1, Byte 1, Bits 7-2); and Com Ver is contained in bits 7 through 10 of the response message (Message 1, Byte 1, Bits 1-0; and Byte 0, Bits 7-6).

The product status is returned in bits 17 through 24 of the response message (Message 1, Byte 2). Bits 17 through 22 of the response message (Message 1, Byte 2, Bits 0-5) are device specific and not used by the server 2. Bits 23 and 24 of the response message (Message 1, Byte 2, Bits 6 and 7) are used to indicate the operational state of an INCOM communicating device. The server 2 interprets and displays a device's status as an ASCII string based on the status of the two bits as is shown in Table 6, below.

The Phase Currents Buffer response (3 0 5) consists of four data messages (1,2,3,4), each containing an IMPACC 24 bit floating-point number for the phase current parameter ($I_A, I_B, I_C, I_X$) in amps.

The Line-to-Line Voltage Buffer response (3 0 6) consists of three data messages (1,2,3), each containing an IMPACC 24 bit floating-point number ($V_{AB}, V_{BC}, V_{CA}$) in volts.

The Power Buffer response (3 0 8) consists of three data messages (1,2,3), each containing an IMPACC 24-bit Floating Point number. The parameters sent include the system's present power value in watts, the power demand in watts, and the energy in watt-hours. The server 2 uses the first message, which includes the Power value.

The Power Buffer response (3 0 9) consists of three data messages (1,2,3), each containing an IMPACC 24-bit Floating Point number. The parameters include the system's present Frequency in Hz, the Vars in volt-amps, and the Power Factor. The server 2 uses the third message, which includes the Power Factor value.

The Energy Buffer response (3 0 A) consists of one data message, which contains a 24-bit unsigned integer number representing the value for energy in units of kilowatt-hours. The maximum range for energy is 0 - 16,777,215 kWh.

The THD Expanded Buffer command (3 0 F, N=42) consists of the following communications sequence: the master, the server 2, sends a slave Transmit Expanded Buffer command (3 0 F), the slave responds with ACK, the server 2 sends the slave a single data message containing the expanded buffer number N=42, and the slave sends the requested buffer as a series of data messages as shown in Table 4, below. The THD values are all IMPACC 24-bit Floating Point numbers. The server 2 uses Messages 2 through 4, which include the Phase A, B, and C THD values.

Table 4

| Message Number | Parameter | Units |
|---|---|---|
| 1 | Byte 0 - Number of additional messages = 5<br>Byte 1 - Reserved = 0<br>Byte 2 - Reserved = 0 | |
| 2 | Phase A current total harmonic distortion | % |
| 3 | Phase B current total harmonic distortion | % |
| 4 | Phase C current total harmonic distortion | % |
| 5 | Neutral current total harmonic distortion | % |
| 6 | Ground current total harmonic distortion | % |

The Product-Specific command for the Waveform Data Header (3 C F, N=01:01:01H) consists of the following communications sequence: the Master, the server 2, sends a slave a Transmit Product-Specific Buffer command (3 C F); the slave responds with ACK; the master sends the slave a single data message containing the product-specific buffer number N=010101 H; and the slave sends the requested buffer as a series of data messages as shown in Table 5, below. The server 2 only uses Message 8, the Phase A, B and C THD values. The THD values are all signed integer numbers, with negative values being invalid. The server 2 converts these numbers to IMPACC 24-bit Floating Point numbers for use in the web pages 22 or 24 of Figure 1.

Table 5

| Message Number | Parameter | Units |
|---|---|---|
| 1 | Byte 0 - Number of additional messages = 11<br>Byte 1 - Frequency = 50 or 60<br>Byte 2 - Samples per cycle = 58 | Hz |
| 2 | Byte 0 - Samples per signal, low byte<br>Byte 1 - Samples per signal, high byte<br>Byte 2 - Sampled data validity | |
| 3 | Byte 0 - Calibration factor for IA<br>Byte 1 - Calibration factor for IB<br>Byte 2 - Calibration factor for IC | |
| 4 | Byte 0 - Calibration factor for IN<br>Byte 1 - Calibration factor for IG<br>Byte 2 - Scale factor for phase currents, low byte | |
| 5 | Byte 0 - Scale factor for phase currents, high byte<br>Byte 1 - Scale factor for ground current, low byte<br>Byte 2 - Scale factor for ground current, high byte | |
| 6 | Byte 0 - Waveform capture index, low byte<br>Byte 1 - Waveform capture index, high byte<br>Byte 2 - Neutral Ratio | |
| 7 | Reserved | |

(continued)

| Message Number | Parameter | Units |
|---|---|---|
| 8 | Byte 0 - Phase A current total harmonic distortion (THD) | % |
| | Byte 1 - Phase B current total harmonic distortion (THD) | % |
| | Byte 2 - Phase C current total harmonic distortion (THD) | % |
| 9 | Byte 0 - Neutral current total harmonic distortion (THD) | % |
| | Byte 1 - Ground current total harmonic distortion (THD) | % |
| | Byte 2 - Reserved | |
| 10 | Reserved | |
| 11 | Reserved | |
| 12 | Reserved | |

The Sub-Network Command (3 D 1) command is used for communicating with INCOM devices, such as 26,28,30, located below a sub-network master, such as the BIM 32 of Figure 1. This command informs the BIM 32 that the data messages that follow are to be interpreted as command / data messages for a device on its INCOM sub-network 40. The sequence of operations is as follows: the master, the server 2, sends the BIM 32 a Process Sub-Network Command (3 D 1); the BIM 32 responds with its status; the server 2 sends the BIM 32 a data message containing the instruction, command, sub-network address, and subcommand of a control message to be sent to the sub-network device (the format of this data message is identical to the equivalent control message, except that the C/D bit is set to "data"); the BIM 32 sends the message to the INCOM sub-network 40 after the C/D bit is set to 1; and the responses (data) received by the BIM 32 from the INCOM devices 26,28,30 are passed to the server 2.

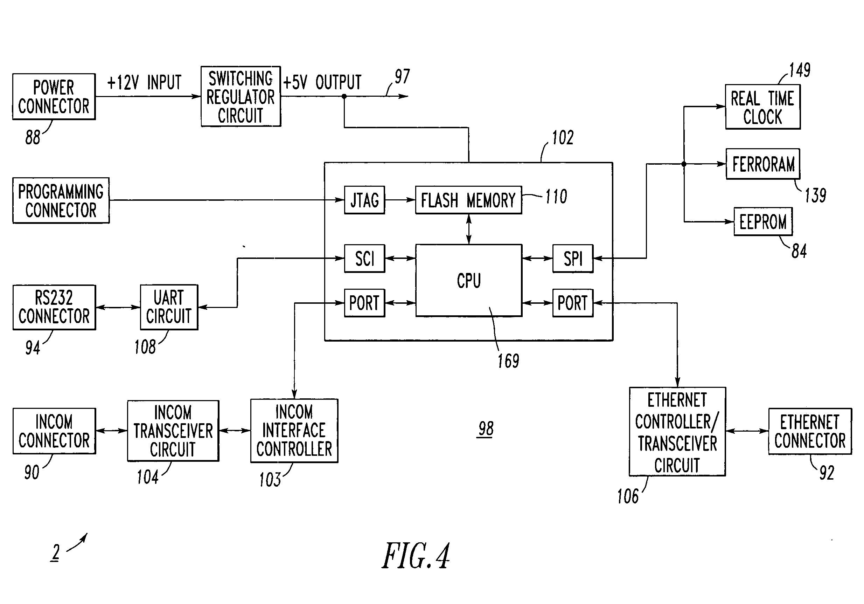

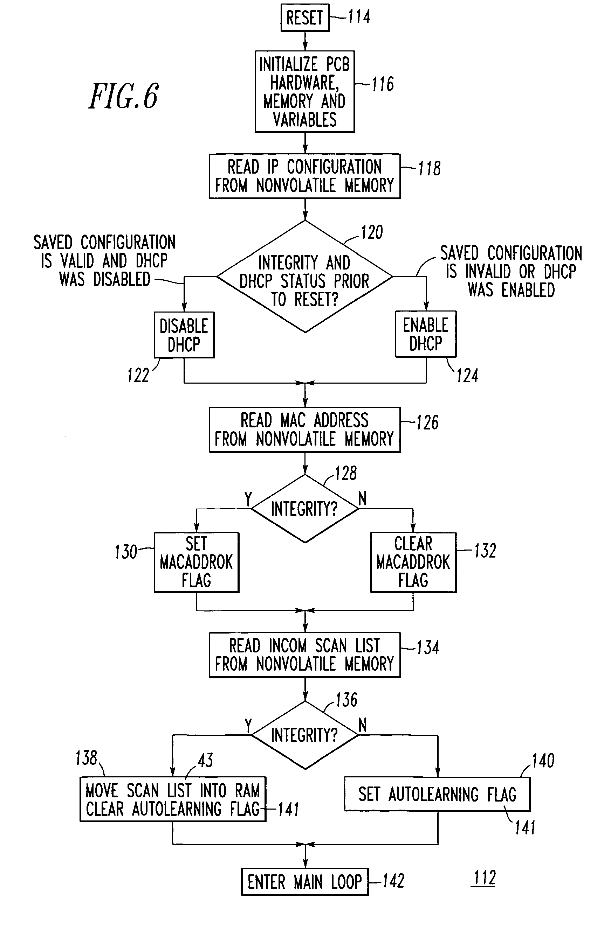

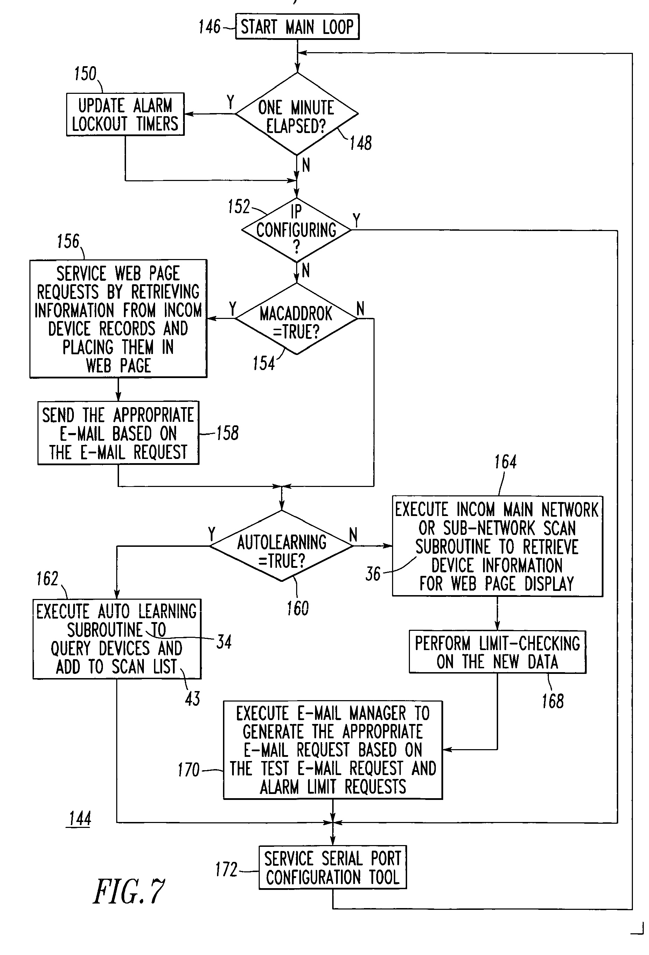

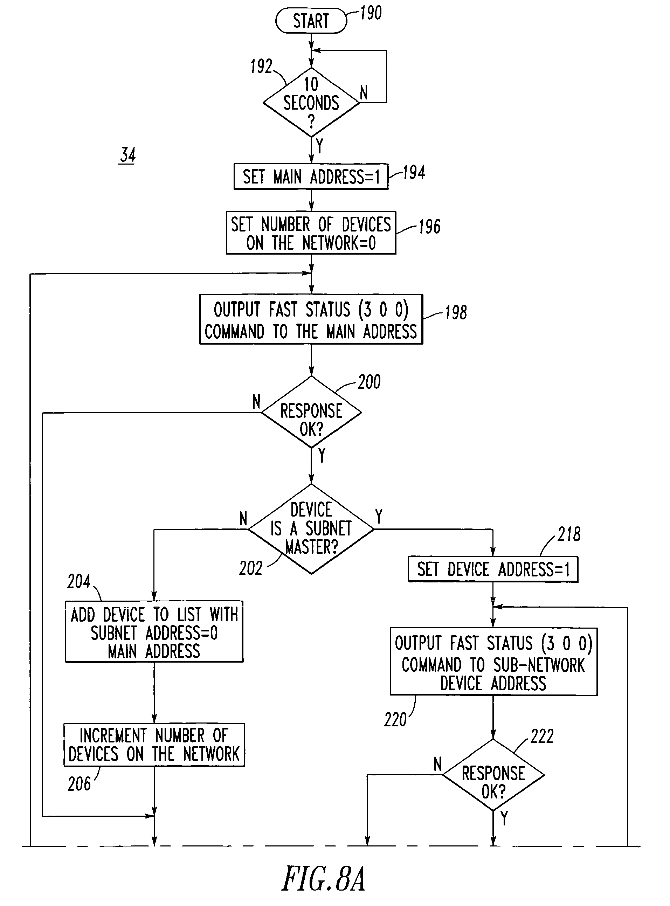

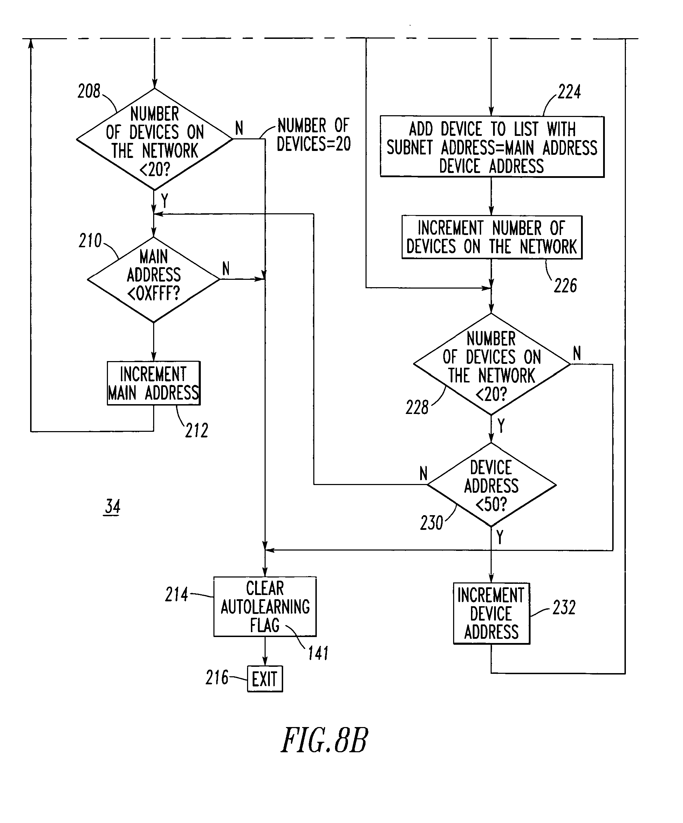

The server 2 has two modes of operation including Normal Operation and Configuration Mode. For Normal Operation, the default web page, such as 42 of Figure 2, is displayed by the server 2. This web page 42 displays the device information for each device in the INCOM scan list 43 (Figure 6) in spreadsheet format. In Configuration Mode, the user may set up the INCOM scan list 43, device labels and limits. Three web pages (two of which are shown in Figures 9 and 10) are used for configuration. The serial port 94 shown in Figure 4 can be used to read and set the devices IP address. This port is serviced at step 172 of Figure 7.

Example 2

A typical web page 42 showing data for eight INCOM slave devices 44 is shown in Figure 2. In this example, address 001H is a circuit breaker (*e.g.*, MCCB) with an Optim 1050 trip unit. Addresses 002H and 003H are power circuit breakers (*e.g.*, Magnum) with Digitrip 1150 trip units. Address 004H is a medium voltage circuit breaker with a Digitrip MV trip unit. Address 006H is a BIM (Breaker Interface Module) with three power circuit breakers (*e.g.*, Magnum) with Digitrip 1150 trip units below it at sub-addresses 001H, 002H and 005H. Sub-address 002H is shown as a name "APT 160B" rather than as an address. Finally, address 009H is shown as a name "MAIN", which is a motor starter (*e.g.*, Advantage) communicating through an ACM (Advantage Control Module). There are no pure metering devices in this example.

The devices at addresses 006.002H (Apt 106B) and 009H (Main) have had labels assigned as shown in Figure 9. For the device at address 00 1 H of Figure 2, currents IB 46 and IC 48 are shown, for example, in red (shown with cross hatching for convenience of illustration), while the power 50 is shown, for example, in yellow (shown with cross hatching for convenience of illustration). In this example, this device has a current limit set for 412 A and a red alarm background as shown in Figure 10. The device also has a power limit set for 320 W and a yellow alarm background as also shown in Figure 10.

Similarly, the status for the device at address 003H is shown OPEN 52 with a red background (shown with cross hatching for convenience of illustration).

The server 2 sends the background display color code (*e.g.*, a two-bit field) to the client, such as 18,20 of Figure 1, along with the various values whenever the client requests the web page 42.

As will be discussed, below, in connection with Figure 7, alarming involves a configurable background color change in the web page 42 and/or a configurable automatic e-mail alert as sent by the server 2. Any value can be configured for alarming.

The example devices disclosed in this example are marketed by Eaton Eaton Electrical, Inc. of Pittsburgh, Pennsylvania.

During Normal Operation, which provides the example web page 42 of Figure 2, the server 2 displays the following information on the web page 42 in, for example, spreadsheet format: Network Address/Name 54, Device Status 56, IA 58, IB 60, IC 62, IX 64, VAB 66, VBC 68, VCA 70, THDA (Total Harmonic Distortion) 72, THDB 74, THDC 76, Power 78, Power Factor 80 and Energy 82. The headings, background and other static information are retrieved from one or more web pages stored in nonvolatile memory 84 (Figure 4) on the server 2. The dynamic web page values listed above are refreshed, for example, about every three seconds. The client's browser sets the refresh rate. The values sent by the server 2 are updated at a rate determined by the server's scan rate of the devices on the INCOM network 14. This scan rate is variable and is determined, in part, by the number of devices on the network.

The Network Address 54 is displayed as three or six hexadecimal numbers (0-F). If the device is on the main network, such as 14 of Figure 1, then it is displayed as "xxx" left-justified in the column. If the device is on a sub-network, such as 40 of Figure 1, then it is displayed as "xxx.yyy", where "xxx" is the main network address and "yyy" is the sub-network address. Again, the address is left-justified in the column.

When the web page 42 is first brought up, the Network Address 54 is replaced with the name of the device if the device name exists in the configuration information. The Address/Name button 86 below the spreadsheet is used to toggle between displaying the device names and the devices' INCOM addresses.

Device Status 56 is displayed as an ASCII string. It is decoded from the S6-S7 bits sent via the (3 0 0) command, along with the Product ID and Device ID (the server 2 does not send the text). If a Product ID and/or Device ID is not recognized, then the default text (Open/Inactive, Closed/Active, Tripped, Alarm) is used. This Device Status text is summarized in Table 6.

Table 6

| Status Bits S7 ... S6 | Breakers | Meters / Transfer Switches | Unknown Devices |
|---|---|---|---|
| 00 | OPEN | INACTIVE | OPEN/ INACTIVE |
| 01 | CLOSED | ACTIVE | CLOSED/ ACTIVE |
| 10 | TRIPPED | (Blank) | TRIPPED |
| 11 | ALARM | ALARM | ALARM |

All other fields are displayed as integer values except for the Power Factor 80, which is displayed to two decimal places ("x.xx"). If a device does not support a given object (e.g., without limitation, $V_{(AB)}$, then its value in the web page 42 is shown as "--". If a device is not responding, then all of its columns (even reference characters 56-82) are shown as "—".

Table 7 shows the fields of the web page 42 that support alarming.

Table 7

| Field | Parameter | Data format | Alarm if ... | Range |
|---|---|---|---|---|
| Status | Open, Closed, Tripped, Alarm | Encoded in two bits | Equal to | N/A |
| IA, IB, IC, IX | Imax | IMPACC Float | Greater than | 0 - 10e16 |
| VAB, VBC, VCA | Vmax | IMPACC Float | Greater than | 0 - 10e16 |
| VAB, VBC, VCA | Vmin | IMPACC Float | Less than | 0 - 10e16 |
| THDA, THDB, THDC | THDmax | IMPACC Float | Greater than | 0 - 100 |
| Power | POWERmax | IMPACC Float | Greater than | 0 - 10e16 |
| Power Factor | Pfmin | IMPACC Float | Less than | 0 - 1.00 |

An alarm occurs when a field's value reaches a limit value. When an alarm occurs, the background color for that field may change to, for example, either red or yellow, and/or an e-mail may be sent to a predefined address. The alarm checking and e-mail functions are done by the server 2 as are discussed, below, in connection with Figure 7.

Example 3

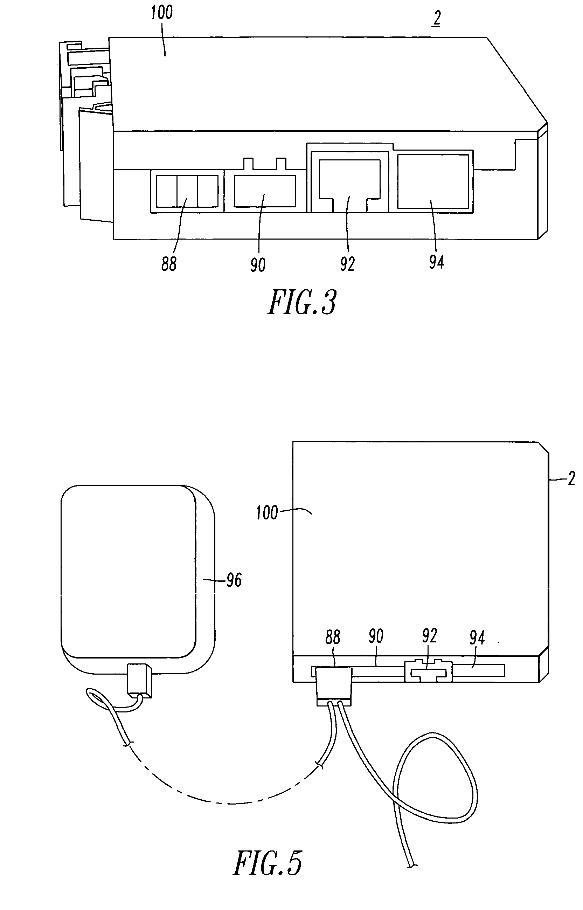

Referring to Figures 3-5, a total of four connectors are used to make electrical connections to the server 2. These connectors include: Power 88; INCOM 90; Ethernet (e.g., RJ45/F) 92; and Terminal 94 (e.g., an RS-232 serial port connector, such as RJ45/F, for a suitable PC serial port).

The server 2 is powered from a suitable external (*e.g.*, +12 VDC; AC/DC; wall plug mounting transformer coupled) power supply 96 (Figure 5). The Power connector 88 is a suitable DC power jack that allows use of standard wall plug mounting class 2 power supplies.

The server 2 has five indicators (not shown) that serve as a user interface. A Health indicator is a single green LED used to indicate the condition of the server 2. This indicator has three states: OFF (internal DC power 97 is not available or the server 2 has malfunctioned), ON (power is applied, but the server 2 is executing a power-on self test), and Slow Flash (a repetitive one second on, one second off indicates that the server 2 is operating normally). An INCOM Transmit indicator is a green LED that indicates, when illuminated, that the server 2 is transmitting a message on the INCOM network 14 (Figure 1). This LED typically flashes as messages are transmitted by the server 2 over the INCOM network 14. The INCOM Receive indicator is a green LED that indicates, when illuminated, that the server 2 is receiving messages on the INCOM network 14. This LED is typically solid green and does not flash in the manner of the transmit LED. The Link OK indicator is located in the Ethernet connector 92. When illuminated, this yellow LED indicates the presence of valid link pulses. The LAN Active indicator is located in the Ethernet connector 92. When illuminated, this green LED indicates the presence of network activity (*e.g.*, a receive packet; a transmit packet; a collision) from, for example, the Internet 16.

Continuing to refer to Figures 3-5, the server 2 includes, for example, a single printed circuit board (PCB) 98 (Figure 4) housed in a DIN rail mounting plastic housing 100. The PCB 98 includes a microcomputer 102, an INCOM interface controller 103, an INCOM transceiver 104 and an Ethernet transceiver 106. Web pages, such as 42 of Figure 2, for viewing device data and configuring alarms and labels are stored in non-volatile memory 84.

The PCB 98 also includes a suitable UART / RS-232 circuit 108 for the Terminal connector 94. The microcomputer firmware 110 enables it to communicate through a suitable "dumb terminal" (not shown) or a personal computer (PC) employing a Microsoft® terminal emulation program (not shown). This firmware 110 enables a user to: configure, for example, the IP address (either manually or automatically via DHCP) for the Internet 16 (Figure 1); and set the INCOM device configuration password (Figure 9). The password enables a user to configure (*e.g.*, without limitation, adding device labels; changing the background display color; setting up alarm e-mail messages) the INCOM devices, such as 4,6,8,10,12 of Figure 1, via the configuration web pages (Figure 9 and 10). The configuration for the Internet 16 also includes: Gateway Address; Subnet Mask; Primary/Secondary DNS and Enable/Disable DHCP.

The microcomputer firmware 110 is discussed, below, in connection with Figures 6, 7, 8A, 8B, 11 and 12. The initialization procedure 112 is shown in Figure 6. After power up or reset, at 114, various hardware components and variables are initialized at 116. Next, at 118, the server 2 reads its Internet configuration information from internal nonvolatile memory 84 (Figure 4). The IP configuration information includes a DHCP Enabled flag, IP Address information and MAC address information. This information is checked for validity, at 120, by performing a suitable checksum check and a suitable complement check. If the saved IP configuration is valid and if the DHCP Enabled flag is not set, at 120, then at 122 the DHCP is disabled. Otherwise, if the saved IP configuration is invalid or if the DHCP Enabled flag is set, then at 124 the DHCP is enabled. Hence, if the DHCP is enabled or there is no IP address, then the server 2 employs the DHCP (Dynamic Host Configuration Protocol) and establishes an IP address. Otherwise, the server 2 employs the IP address retrieved from the memory 84.

Next, after 122 or 124, at 126, the MAC address information is read from internal nonvolatile memory 84 (Figure 4). This information is checked for validity, at 128, in a similar manner as was done at 120. If the saved MAC address information is valid, at 128, then at 130 a MACAddrOK flag is set. On the other hand, if the saved MAC address information is invalid, then at 132 the MACAddrOK flag is cleared. If there is no MAC address, then the server 2 does not do any Ethernet (Internet) functions. In addition, an error message is displayed on the local terminal (not shown) prompting the user that the server 2 needs to be factory configured.

Next, after 130 or 132, at 134, the INCOM scan list 43 is read from internal nonvolatile memory 84 (Figure 4). This information is checked for validity, at 136, in a similar manner as was done at 120. If the saved INCOM scan list 43 is valid, at 136, then at 138 the scan list 43 is moved to RAM memory 139 (Figure 4) and an AutoLearning flag 141 is cleared. On the other hand, if the saved INCOM scan list 43 is invalid, then at 140 the AutoLearning flag 141 is set. Hence, if the INCOM scan list 43 is valid, then the server 2 uses it and begins INCOM scanning operation (step 164 of Figure 7). If there is no INCOM scan list 43, then the server 2 learns the system as is discussed, below, in connection with Figures 8A-8B. Finally, after 138 or 140, at 142, the main loop procedure 144 of Figure 7 is executed.

During Normal Operation, as shown in Figure 7, the server 2 performs the following functions: service the Internet port (*e.g.*, perform Ethernet Stack functions) at 156; scan the INCOM devices at 164; perform limit-checks on the INCOM data at 168; execute an e-mail manager at 170; and service the local serial port terminal (not shown) at 172.

After starting, at 146, the procedure 144 checks whether a suitable time (*e.g.*, one minute; any suitable time) has elapsed at 148 by checking a flag maintained by real time clock 149 (Figure 4). If the time has elapsed, then alarm lockout timers are updated at 150. Otherwise, or after 150, it is determined if the IP configuration is occurring by testing the MACADDROK flag, which can be set at 130 or cleared at 132 of Figure 6. The MACADDROK flag can also be set as part of the configuration process 172. If so, then execution resumes at 172. On the other hand, if the IP configuration is not occurring, then, at 154, it is determined if the MACADDROK flag of step 130 of Figure 6 is set. If not, then execution resumes at 160. Otherwise, at 156, any web page requests from a client, such as 18,20 of Figure 1, are serviced by retrieving information from INCOM device records in RAM 139 (Figure 4) and placing those in the corresponding web page, such as 42 of Figure 2. Step 156 supports, for example, Ethernet Stack functions. This primarily involves download requests from a client for static web pages and the corresponding dynamic data values. Otherwise, uploads only occur when the server 2 is being configured. Static web pages are retrieved from internal nonvolatile memory 84 (Figure 4).

Next, at 158, an e-mail message 159 (Figure 1) is sent over the Internet 16 (Figure 1) if an e-mail request was set at 170. The alarm lockout timers, at 150, are used to prevent the sending of a continual string of e-mail messages should an alarm event that has been programmed to send an e-mail occur. The associated alarm timer can be set to a suitable value (*e.g.*, without limitation, 60 minutes). This ensures, in this example, that an e-mail message for the alarm will be sent only once every hour until the alarm condition is removed. Then, at 160, it is determined if the AutoLearning flag 141 (Figure 6) is set. If so, then, at 162, the Auto Learning subroutine 34 (Figures 8A-8B) is executed to query INCOM devices and add them to the INCOM scan list 43. Otherwise, at 164, the main network or sub-network scan subroutine 36 of Figure 11 is executed.

After the INCOM scan list 43 is established, the server 2 continuously interrogates the INCOM devices in the scan list using the INCOM commands shown in Table 3, above, which shows the INCOM server-to-Slave Command Set.

The server 2 maintains a device database 169 (*e.g.*, in volatile RAM of the CPU of microcomputer 102 of Figure 4) consisting of the data obtained from the INCOM devices in the INCOM scan list 43. Each device in the scan list 43 is interrogated in sequence and the device database 169 is constantly being updated with new data. When new data is read, the server 2 performs limit checks on the values at 168 of Figure 7. The database 169 is then updated with the appropriate background color and a flag is set, at 170, to send an e-mail if the server 2 has been configured to do so.

In the scan 164, if an INCOM device fails to respond, for example, for five consecutive times or responds with an error, for example, for five consecutive times, then the server 2 sets all corresponding values to zeros. The corresponding web page, such as 42 (Figure 2), displays dashes (*e.g.*, "—") in all data fields (not shown) under this condition. Otherwise, the server 2 sends the data to the corresponding client, such as 18,20 (Figure 1), as it is requested. In the case of IMPACC floats, if the data is marked invalid, then it is sent to the client as is. The client checks the invalid bit and displays a dash in that field if the data is invalid.

At 168, the server 2 performs limit-checking on each INCOM value for the purposes of alarming. Whether a value is checked for a limit, the actual limit value, and the action taken if a limit is reached are all configurable parameters (Figure 10) uploaded to the server 2 from the client. If the server 2 has not been configured, then it does not perform the limit checks. In addition, if the value or the limit value is invalid, then the server 2 assumes the limit value has not been reached.

Example 4

The server 2 performs limit-checking using the following algorithm. First, it checks whether there are valid limits (*i.e.*, whether the server 2 has been configured). If so, it continues. Otherwise, it assigns default limit values (default color codes and no e-mail). Second, for the Status parameter 56 (Figure 2), it sets the color code and sends an e-mail based on the Status value (00, 01, 10, 11) of Table 6. Finally, it assumes that all other values are IMPACC Floats, and that all mantissas are positive. There are two types of values - base 10 exponent and base 2 exponent. When limits are assigned to an INCOM device, the client sends both the decimal and the binary IMPACC Float values to the server 2.

Example 5

The following algorithm is used to check the limits. First, the server 2 examines the value type (Decimal or Binary Float) and calls the appropriate compare subroutine with the limit value type that matches the input value type. Second, if either the value or the limit is invalid, it assumes the limit has not been reached. Otherwise, it compares the limit value to the input value. Finally, if the input value is equal to or beyond (greater than for maximum limits, less than for minimum limits) the limit value, then it sets the color code to the limit value assigned for this parameter, and sets the send e-mail flag if e-mails are enabled for this parameter. If the input value has not reached the limit value, then it sets the color code to the default value, and does not change the send e-mail flag.

Values are preferably limit-checked immediately after they are obtained. In this manner, the background color code in the database 169 (Figure 4) is always up to date and appropriate for the value.

Finally, at 172, the server 2 supports a terminal (not shown) connected to its serial port connector 94 (Figure 4). This terminal is used, for example, to display and change Internet addressing and to set the INCOM device configuration password (Figure 9).

Example 6

At 170, the server 2, if configured, initiates the sending of an e-mail if any of the following values (Figure 2) for any corresponding INCOM device reaches its configured limit value: Status 56; IA 58, IB 60, IC 62 or IX 64; VAB 66, VBC 68 or VCA 70; THDA 72, THDB 74 or THDC 76; Power 78; or Power Factor 80. The e-mail may contain, for example, the cause (*i.e.*, which limit was reached or exceeded) and/or a snapshot of all of the device's values in the database 169 (Figure 4) at the time the limit was reached or exceeded.

Example 7

The server 2 employs the following algorithms, at 170, to handle sending e-mails in order to keep the user(s) from being inundated with e-mails whenever a limit is reached or exceeded. For the Status value 56 of Figure 2, an e-mail is sent whenever the status changes to the limit state. Additional e-mails are not sent unless the status of the corresponding INCOM device changes to another state that is configured to have an e-mail sent, or if the status of the device changes to a different state, then changes back to the state that is configured to have an e-mail sent. For the analog values, an alarm lockout timer (as updated at 150) is maintained for each INCOM device in the INCOM scan list 43. Alternatively, alarm lockout timers may be maintained for each parameter of each INCOM device. Whenever an e-mail is sent, this timer is started. Until the timer reaches its configured time, no further e-mails are sent for the corresponding INCOM device due to an analog value reaching its limit.

E-mails are sent on a per-INCOM device basis. That is, there is an alarm lockout timer for each INCOM device in the INCOM scan list 43. As an example, an e-mail generated by a device at index 0 in the scan list 43 does not prevent an e-mail from being sent due to a limit being reached by a device at index 1 in that scan list. The alarm lockout timer for an INCOM device is reset whenever the device's configuration is saved. A user can then reset the alarm lockout timer for a device after receiving an e-mail by merely bringing up the device's device configuration screen (Figure 10) and clicking the <Save> button 174.

Example 8

When the user clicks the Configure E-mail button 176 (Figure 9), an E-mail Configuration form (not shown) is displayed. The server 2 may send e-mails whenever it detects that a limit has been reached by one of the INCOM values. The E-mail Configuration form is employed to set up this e-mail function. The form contains, for example, fields and buttons for the URL of the e-mail server (not shown) on the Internet 16 (Figure 1); the User ID; the User Password; a Send To list; the Lockout Time; a Save button and an Exit without saving button. Entries in the Send To list are separated by semicolons. The Lockout Time is set via a pull-down menu (not shown). For example, values of 15 minutes to 48 hours, in 15-minute increments, may be entered. The default value is 2 hours. To upload the new e-mail configuration into the server 2, the <Save> button is clicked. To exit without saving any of the changes, the <Exit without saving> button is clicked.

Example 9

The server 2 (Figure 1) also provides an e-mail configuration web page (not shown). The server 2 employs SMTP protocol to send e-mail messages. The e-mail configuration web page employs a Submit Only button (not shown), which saves changes to the e-mail configuration without sending a test e-mail message and exits back to the configuration device list (Figure 9) to save settings, and a Submit and Perform Test button (not shown), which saves the changes to the e-mail configuration, sends an e-mail message as a test and exits back to the configuration device list to save settings. This configuration web page is activated by the DEVICE CONFIGURATION link 246 of the web page 42 of Figure 2. The configuration web page also includes entry fields or boxes (not shown) to accept: (1) the Mail Server Address for the SMTP protocol; (2) the Sender Address, which appears in the "From:" field of an Alarm e-mail message; (3) the Alarm e-mail Recipient Address, which may include, for example, up to five e-mail addresses (*e.g.*, e-mail recipients are entered in ascending order, such that, for example, the first e-mail Recipient Address is populated before the second such address) to receive alarm e-mail messages; and (4) a Lockout Timer Entry, which is the amount of time to lock-out e-mail messages. Finally, there is an Exit button (not shown), which exits back to the configuration device list without saving any changes.

Example 10

The client uses the following command to download the Device List configuration form 178 from the server 2: GET ADDRESSES.TXT. The server 2 responds to this command with the list of addresses in the INCOM scan list 43, in the format shown by Table 8.

Table 8

Device Address at Index 0 (8 bytes)
    MS Byte – 0x30
    Byte 6 – 0x78 ("x")
    Byte 5 – Sub-network Address MS Nibble
        (0 if not a sub-network device)
    Byte 4 – Sub-network Address Middle Nibble
        (0 if not a sub-network device)
    Byte 3 – Sub-network Address LS Nibble
        (0 if not a sub-network device)
    Byte 2 – Device Address MS Nibble
    Byte 1 – Device Address Middle Nibble
    LS Byte – Device Address LS Nibble
Delimiter Byte – 0x2C (",")
Name String Delimiter – 0x22 (""")
Device Name String – up to 14 characters
Name String Delimiter – 0x22 (""")
Delimiter Byte – 0x2C (",")
Device Address at Index 1 (8 bytes)
Delimiter Byte – 0x2C (",")
Name String Delimiter – 0x22 (""")
Device Name String – up to 14 characters
Name String Delimiter – 0x22 (""")
Delimiter Byte – 0x2C (",")

    .
    .
    .

Device Address at Index 19 (8 bytes)
Delimiter Byte – 0x2C (",")
Name String Delimiter – 0x22 (""")
Device Name String – up to 14 characters
Name String Delimiter – 0x22 (""")

The server 2 responds with the address and name information for all of the example 20 locations in the INCOM scan list 43. If there is no INCOM device at a location in the scan list 43, then the server 2 sends an address of zeros (0x30) and no name string.

For existing devices, the following command is sent to the server 2 to download the Device Configuration form 180 (Figure 10): GET YYxx, wherein "xx" is the scan list index (0-19) of the INCOM device to be modified.

For a new device, the following command is sent to the server 2 to download the (new) Device Configuration form 180: GET NEWDEVICE.TXT. For an existing device (the GET YYxx command), the server 2 responds with the device configuration information for the device. For a new device, the server 2 responds with the default information for a device. In both cases, the response is in the format shown in Table 9.

Table 9

```
Index of the Device
        MS Byte – 0x30
        Byte 2 – 0x78 ("x")
        Byte 1 – Device Index MS Nibble
        LS Byte – Device Index LS Nibble
Delimiter Byte – 0x2C (",")
Device Address (8 bytes)
        MS Byte – 0x30
        Byte 6 – 0x78 ("x")
        Byte 5 – Sub-network Address MS Nibble (0 if not a sub-network device)
        Byte 4 – Sub-network Address Middle Nibble (0 if not a sub-network device)
            Byte 3 – Sub-network Address LS Nibble (0 if not a sub-network device)
            Byte 2 – Device Address MS Nibble
            Byte 1 – Device Address Middle Nibble
            LS Byte – Device Address LS Nibble
        Delimiter Byte – 0x2C (",")
        Name String Delimiter – 0x22 (""")
        Device Name String – up to 14 characters
        Name String Delimiter – 0x22 (""")
        Delimiter Byte – 0x2C (",")
        Limits Delimiter – 0x22 (""")
Device Limits
        MS Byte – Status00 Limit, Color Code, and E-mail Action, MS Nibble
                (ASCII-encoded)
                bits 7 ... 4 – Not used
        Byte 90 – Status00 Limit, Color Code, and E-mail Action, LS Nibble
                bit 3 – Limit is Active (1=limit active, 0=limit not used)
                bit 2 – Send E-mail (1=send e-mail on limit, 0=e-mail not used)
                bits 1 ... 0 – Color Code (00=default, 01=red, 10=yellow, 11=not used)
        Bytes 89 ... 88 – Status01 Limit, Color code, and E-mail Action
        Bytes 87 ... 86 – Status10 Limit, Color code, and E-mail Action
        Bytes 85 ... 84 – Status11 Limit, Color code, and E-mail Action
        Bytes 83 ... 78 – IA thru IX Limit (IMPACC Float, binary multiplier)
        Bytes 77 ... 72 – IA thru IX Limit (IMPACC Float, decimal multiplier)
        Byte 71 – IA thru IX Color Code and E-mail Action, MS Nibble
                bits 7 ... 4 – Not used
        Byte 70 – IA thru IX Color Code and E-mail Action, LS Nibble
                bit 3 – Not used
                bit 2 – Send E-mail (1=send e-mail on limit, 0=e-mail not used)
                bits 1 ... 0 – Color Code (00=default, 01=red, 10=yellow, 11=not used)
        Bytes 69 ... 64 – VAB thru VCA High Limit (IMPACC Float, binary multiplier)
        Bytes 63 ... 58 – VAB thru VCA High Limit (IMPACC Float, decimal multiplier)
        Bytes 57 ... 56 – VAB thru VCA High Limit Color Code and E-mail Action
        Bytes 55 ... 50 – VAB thru VCA Low Limit (IMPACC Float, binary multiplier)
        Bytes 49 ... 44 – VAB thru VCA Low Limit (IMPACC Float, decimal multiplier)
        Bytes 43 ... 42 – VAB thru VCA Low Limit Color Code and E-mail Action
        Bytes 41 ... 36 – THDA thru THDC Limit (IMPACC Float, binary multiplier)
        Bytes 35 ... 30 – THDA thru THDC Limit (IMPACC Float, decimal multiplier)
        Bytes 29 ... 28 – THDA thru THDC Limit Color Code and E-mail Action
        Bytes 27 ... 22 – Power Limit (IMPACC Float, binary multiplier)
        Bytes 21 ... 16 – Power Limit (IMPACC Float, decimal multiplier)
        Bytes 15 ... 14 – Power Limit Color Code and E-mail Action
        Bytes 13 ... 8 – Power Factor Limit (IMPACC Float, binary multiplier)
        Bytes 7 ... 2 – Power Factor Limit (IMPACC Float, decimal multiplier)
        Bytes 1 ... 0 (LS Byte) – Power Factor Limit Color Code and E-mail Action
```

The configuration information is referenced through the device index. The device index is the location of the device in the INCOM scan list 43 and in the array of configuration structures. When an existing device is modified, the client sends the index of the device to be modified to the server 2. For new devices, however, the server 2 assigns the next open device index to the new device, and then transmits the device index to the client when configuration has been completed.

After entering the configuration information, the user clicks the <Save> button 174 or the <Remove Device> button 182 (Figure 10). In either case, the following command is sent to the server 2: POST UPxx, wherein "xx" is the scan list index (0-19) of the device to be modified. When the <Save> button 174 is clicked, the client sends the configuration information that has been entered by the user. When the <Remove Device> button 182 is clicked, the client sends all zeros for the configuration information (the Device Name will be a Null String of zero length). Since the device address is all zeros, which is invalid, this effectively removes the device from the scan list 43. For both commands, the information of Table 10 is sent to the server 2 as the data portion of the POST command.

Table 10

Device Address
    MS Byte – Sub-network Address MS Nibble (0 if not sub-network device)
    Byte 4 – Sub-network Address Middle Nibble (0 if not sub-network device)
    Byte 3 – Sub-network Address LS Nibble (0 if not sub-network device)
    Byte 2 – Device Address MS Nibble
    Byte 1 – Device Address Middle Nibble
    LS Byte – Device Address LS Nibble
Name String Length (ASCII-encoded, 0x30 – 0x3D)
Device Name String – up to 13 characters
Device Limits
    MS Byte – Status00 Limit, Color Code, and E-mail Action, MS Nibble
       `(ASCII-encoded)
        bits 7 ... 4 – Not used
    Byte 90 – Status00 Limit, Color Code, and E-mail Action, LS Nibble
        bit 3 – Limit is Active (1=limit active, 0=limit not used)
        bit 2 – Send E-mail (1=send e-mail on limit, 0=e-mail not used)
        bits 1 ... 0 – Color Code
           (00=default, 01=red, 10=yellow, 11=not used)
    Bytes 89 ... 88 – Status01 Limit, Color code, and E-mail Action
    Bytes 87 ... 86 – Status10 Limit, Color code, and E-mail Action
    Bytes 85 ... 84 – Status11 Limit, Color code, and E-mail Action
    Bytes 83 ... 78 – IA thru IX Limit (IMPACC, binary multiplier)
    Bytes 77 ... 72 – IA thru IX Limit (IMPACC, decimal multiplier)
    Byte 71 – IA thru IX Color Code and E-mail Action, MS Nibble
        bits 7 ... 4 – Not used
    Byte 70 – IA thru IX Color Code and E-mail Action, LS Nibble
        bit 3 – Not used
        bit 2 – Send E-mail (1=send e-mail on limit, 0=e-mail not used)
        bits 1 ... 0 – Color Code
           (00=default, 01=yellow, 10=red, 11=not used)
    Bytes 69 ... 64 – VAB thru VCA High Limit (IMPACC, binary multiplier)
    Bytes 63 ... 58 – VAB thru VCA High Limit (IMPACC, decimal multiplier)
    Bytes 57 ... 56 – VAB thru VCA High Limit Color Code and E-mail Action
    Bytes 55 ... 50 – VAB thru VCA Low Limit (IMPACC, binary multiplier)
    Bytes 49 ... 44 – VAB thru VCA Low Limit (IMPACC, decimal multiplier)
    Bytes 43 ... 42 – VAB thru VCA Low Limit Color Code and E-mail Action
    Bytes 41 ... 36 – THDA thru THDC Limit (IMPACC, binary multiplier)
    Bytes 35 ... 30 – THDA thru THDC Limit (IMPACC, decimal multiplier)
    Bytes 29 ... 28 – THDA thru THDC Limit Color Code and E-mail Action
    Bytes 27 ... 22 – Power Limit (IMPACC, binary multiplier)
    Bytes 21 ... 16 – Power Limit (IMPACC, decimal multiplier)
    Bytes 15 ... 14 – Power Limit Color Code and E-mail Action
    Bytes 13 ... 8 – Power Factor Limit (IMPACC, binary multiplier)
    Bytes 7 ... 2 – Power Factor Limit (IMPACC, decimal multiplier)
    Bytes 1 ... 0 (LS Byte) – Power Factor Limit Color Code and E-mail Action

Example 11

During step 162 of Figure 7, the INCOM portion of server 2 automatically learns the devices on the INCOM network 14 (Figure 1) upon reset, if the server 2 has not been configured, and then continuously scans up to, for example, twenty devices for the following parameters: Status; Currents; Voltages; Total Harmonic Distortion; Power; Power Factor; and Energy, as are displayed in Figure 2. A Custom INCOM scan list (not shown) may be generated by the user after entry of the password in entry field 184 and clicking the <Enter> button 186 of Figure 9. This accesses a password-protected web page (not shown). Alternatively, the INCOM scan list 43 may be automatically updated upon user request through the <AutoDetect> button 188 of Figure 9.

Referring to Figures 8A-8B, the Auto Learning subroutine 34 is shown. The server 2 checks each INCOM address (beginning with 1) on the INCOM network 14 for an INCOM device, such as 4 of Figure 1. If a non-sub-network master, such as 4, is found, then it is added to the INCOM scan list 43 (Figure 7). If the device is a sub-network master, such as the BIM 32 of Figure 1, then the server 2 checks each address under it (beginning with 1) and adds the devices found, such as 26,28,30 of Figure 1, to the scan list 43. The server 2 then picks up searching the main INCOM network 14 again at the next address after the sub-network master's address. The server 2 continues searching until either all of the main network addresses (*e.g.*, 1-4095) have been checked or, for example, 20 devices have been found.

The subroutine 34 occurs only once, at 162 of Figure 7, after power-up, or upon command from the button 188 of the configuration web page 178 of Figure 9. The server 2 does not continuously scan the INCOM network 14 (Figure 1) for new devices. While it is learning, if a web page is requested, then the server 2 puts out a "server is learning, please wait" web page (not shown). This web page periodically requests, for example, the web page 42 (Figure 2), in order that when the server 2 has completed its auto-learn, the web page 42 will automatically come up.

The server 2 preferably supports the local configuration terminal (not shown) while it is learning the INCOM network(s), such as 14,40 (Figure 1). After starting, at 190, but before beginning the auto-learn function, the server 2 waits for a suitable time (*e.g.*, about 10 seconds; any suitable time) at 192 by checking a timer, such as is maintained by the clock 149 of Figure 4. This ensures that all devices on the INCOM network(s) have powered up properly and are ready to respond to INCOM communications.

Next, at 194 and 196, the Main Address is initialized to one and the Number of Devices (NumDevices) on the INCOM network(s) 14,40 is initialized to zero. Then, at 198, a Fast Status (3 0 0) command is output to the INCOM device at Main Address. Next, at 200, it is determined if a proper response is received from that INCOM device. If not (*e.g.*, there is a response timeout or an improper response), then execution resumes at 208. On the other hand, if there was a good response, then at 202, it is determined, from that response (*e.g.*, the (3 0 0) status response includes the product ID, such as BIM), if the INCOM device is a sub-network master at 202. If not, then at 204, that device is added to the INCOM scan list 43 (Figure 7) with Subnet Address =0 and the Main Address. Next, at 206, the Number of Devices is incremented. Then, at 208, if that count is less than 20, then, at 210, it is determined if the Main Address is less than 0xFFF. If so, then at 212, the Main Address is incremented after which step 198 is repeated. On the other hand, if the Number of Devices is equal to 20 at 208, then, at 214, the AutoLearning flag 141 is cleared before the Auto Learning subroutine 34 exits at 216.

If, however, it is determined, at 202, from the INCOM device response, that it is a sub-network master, then at 218 the Device Address is set to one before a Fast Status (3 0 0) command is output, at 220, to the sub-network INCOM device at Device Address. Next, at 222, it is determined if a proper response is received from that sub-network INCOM device. If not (*e.g.*, there is a response timeout or an improper response), then execution resumes at 228. On the other hand, if there was a good response, then at 224 that device is added to the INCOM scan list 43 (Figure 7) with Subnet Address=Main Address at Device Address. Next, at 226, the Number of Devices is incremented. Then, at 228, if that count is less than 20, then, at 230, it is determined if the Device Address is less than 50. If so, then at 232, the Device Address is incremented after which step 220 is repeated. On the other hand, if the Number of Devices is equal to 20 at 228, then, at 214, the AutoLearning flag 141 is cleared before the Auto Learning subroutine 34 exits at 216. If, however, the Device Address is 50 at 230, then execution resumes at 210.

Referring to Figure 9, the user preferably enters the password in entry field 184, in order to change the INCOM device list configuration. For example, the Add button 244, the AutoDetect button 188 and the Configure E-mail button 176 may be grayed-out (not shown) with the corresponding functions not being accessible unless the user has first entered the correct password. If the user wishes to change an existing device's configuration, then the user clicks the View/Edit button, such as 238, next to that device's address 240 or label 242 (here, the label is blank). If the user wishes to add a new device, then the Add button 244 is clicked at the bottom of the list. In either case, this action brings up the Device Configuration form 180, an example of which is shown in Figure 10.

The INCOM device list configuration form 178 is entered via a link 246 on the web page 42 of Figure 2. Preferably, only one client should configure the server 2. If multiple clients attempt to configure the server 2 at the same time, then the results may be unpredictable (*e.g.*, there may be timeouts; information that is a mixture of the old and new configurations may be uploaded into the server 2). When the Configuration Mode is entered from the link 246, the server 2 displays the form 178. The form 178 is exited by clicking the Exit button 248.

The devices in the form 178 are listed by address. The address is displayed as three hexadecimal numbers or as two, three hexadecimal numbers, which are separated by a decimal point and are in the same format as on the web page 42 of Figure 2. The device type and name, if they exist, are also shown in the table. The device type is decoded from the Product ID and Device ID, which are read from the device when the web page 42 is displayed. If a new device is added, then the Product ID and Device ID have not yet been read and, hence, the Device Type shown is "Unknown" (not shown). The View/Edit button 238 enables the user to examine and/or change the device's configuration. If there are less than, for example, 20 devices in the INCOM scan list 43, then there is a blank entry, such as 250, to allow the user to enter a new device, along with the Add button 244. However, until the correct password has been entered, the user may only enter a password, view (but not change) the configuration for an INCOM device, or exit. When the correct password has been entered, in addition to the above options, the user may also initiate AutoDetection, configure the e-mail function, change the configuration for an INCOM device, and add a device to the INCOM scan list 43.

When the user clicks the AutoDetect button 188, then a warning (not shown) is displayed. If the user wishes to proceed, then the server 2 erases its INCOM scan list 43 and initiates the Auto Learning subroutine 34 of Figures 8A-8B. When that subroutine 34 is completed, the server 2 retains this scan list *(i.e.,* it is considered to be configured) if it is reset. All of the device configuration information is erased.

In Figure 10, both the Sub-network Master Address 252 and the Device Address 254 are displayed as three hexadecimal numbers. If this INCOM device is on the main INCOM network 14 (*i.e.*, the device is not under a Sub-network Master, such as the BIM 32 of Figure 1), then the Sub-network Master address is shown as $000_H$. The name 255 may consist of up to 13 ASCII characters.

The Device Type 256 is decoded from the product ID and the device ID that is returned from a Fast Status (3 0 0) command. If this information is unavailable (*i.e.*, for a new device), or if the server 2 does not recognize the codes, then the Device Type is not shown.

The value fields for the status parameters 258 (Open/Inactive, Closed/Active, Tripped, and Alarm) are left blank, as they are not applicable. The value fields for the remaining parameters 260 are 5-digit numbers. In this example, negative alarm values are not accepted.

For each parameter, the Display Background fields 262 include a pull-down box containing 3 choices: "Red", "Yellow" and "Default," and the Send E-mail fields 264 include a checkbox. If the password (Figure 9) is correct, then the <Remove Device> button 182 and the <Save> button 174 are shown. All fields may be configured, including the Device Address 254. If that address is changed, then the server 2 will begin interrogating and applying the limits to the device at the new address. Changing the Device Address 254 effectively removes the device at the old address from the INCOM scan list 43, and adds the device at the new address to the scan list, with the same configuration. Otherwise, the buttons 182,174 are grayed-out (not shown) and the user cannot change the device's configuration.

To upload the new configuration for the device into the server 2, the <Save> button 174 is clicked. To remove the device from the INCOM scan list 43, the <Remove Device> button 182 is clicked. To exit without saving any of the changes, the <Exit without saving> button 266 is clicked.

Example 12

The client downloads the values for the web page 42 (Figure 2) from the server 2 using the command: GET SPREADSHEET.TXT. The server 2 responds to this command with the INCOM data and the background color code for each parameter for every device in the INCOM scan list 43. Data is sent to the client as ASCII-encoded binary values. Bytes are transmitted beginning with the most-significant byte and ending with the least-significant byte (*i.e.*, from left to right below). An example of the data format is shown in Table 11. The Sub-network Address MS, Mid and LS Nibbles are zero if the device is not a sub-network device. The Number of Devices and the Device Index are both in the form of:

$$0x30|0x30|0x30|0x30|MS\ Nibble|LS\ Nibble.$$

Table 11

Number of Devices (6 bytes – 4 unused)
Device Information (repeated for each device):
    Device Index (6 bytes – 4 unused)
    Address (6 bytes)
        MS Byte – Sub-network Address MS Nibble
        Byte 4 – Sub-network Address Mid Nibble
        Byte 3 – Sub-network Address LS Nibble
        Byte 2 – Device Address MS Nibble
        Byte 1 – Device Address Mid Nibble
        Byte 0 – Device Address LS Nibble
    Status/Product ID/Status Color Code (6 bytes)
        MS Byte – S7, S6, P5, P4
        Byte 4 – P3, P2, P1, P0
        Byte 3 – 0, 0, D5, D4
        Byte 2 – D3, D2, D1, D0
        Byte 1 – Energy Valid flag, 0, 0, 0
        LS Byte – 0, 0, Status Color Code (2 bits)
    Color Codes (6 bytes)
        MS Byte – Power and Power Factor Color Codes (2 bits each)
        Byte 4 – THDB and THDC Color Codes (2 bits each)
        Byte 3 – VCA and THDA Color Codes (2 bits each)
        Byte 2 – VAB and VBC Color Codes (2 bits each)
        Byte 1 – IC and IX Color Codes (2 bits each)
        LS Byte – IA and IB Color Codes (2 bits each)
    IA (6 bytes – IMPACC Float format)
        MS Byte – Byte 2 MS Nibble
        Byte 4 – Byte 2 LS Nibble
        Byte 3 – Byte 1 MS Nibble
        Byte 2 – Byte 1 LS Nibble
        Byte 1 – Byte 0 MS Nibble
        LS Byte – Byte 0 LS Nibble
    IB (6 bytes – IMPACC Float format)
    IC (6 bytes – IMPACC Float format)
    IX (6 bytes – IMPACC Float format)
    VAB (6 bytes – IMPACC Float format)
    VBC (6 bytes – IMPACC Float format)
    VCA (6 bytes – IMPACC Float format)
    THDA (6 bytes – IMPACC Float format)
    THDB (6 bytes – IMPACC Float format)
    THDC (6 bytes – IMPACC Float format)
    Power (6 bytes – IMPACC Float format)
    Power Factor (6 bytes – IMPACC Float format)
    Energy (6 bytes – 24-bit unsigned integer)
        MS Byte – MS Nibble of MS Byte
        Byte 4 – LS Nibble of MS Byte
        Byte 3 – MS Nibble of Middle Byte
        Byte 2 – LS Nibble of Middle Byte
        Byte 1 – MS Nibble of LS Byte
        LS Byte – LS Nibble of LS Byte

Device names are not transmitted to the client as part of the spreadsheet information. A device name is included with the associated limit parameters as part of the device configuration information.

Figure 11 shows main network scan subroutine 36 of Figure 7, which begins at 268. Next, at 270, the INCOM address, as referenced by DataPtr, is obtained from the INCOM scan list 43 (Figure 7). DataPtr is initialized to the proper value by step 116 of Figure 6. Next, at 272, it is determined (*e.g.*, if the address is in the form "xxx.000", wherein "xxx" is a non-zero, "don't care" term) if the address from step 270 is on the main INCOM network 14 of Figure 1, or if the address from step 270 is on the INCOM sub-network 40 of Figure 1 (*e.g.*, if the address is in the form "xxx.xxx", wherein "xxx" is a non-zero, "don't care" term). If not, then the address is on the INCOM sub-network 40 of Figure 1 and execution resumes at 278. Otherwise, at 274, the device information is retrieved from the device on the main INCOM network 14, and that information is stored in the database 169 (Figure 4) as also referenced by DataPtr. Next, at 278, the variable DevCount is incremented. DevCount is initialized to the proper value by step 116 of Figure 6 and by step 282. At 280, it is determined if the last device in the INCOM scan list 43 was reached by comparing DevCount to NumDevices, which is the count of devices in the INCOM scan list 43 as determined by step 206 (Number of Devices) of Figure 8A. If DevCount = NumDevices, at 280, then, at 282, DevCount is reset to zero and DataPtr is reset to the address of the first structure in the INCOM scan list 43 and in the database 169. Finally, the subroutine 36 exits at 284. On the other hand, if the last device in the INCOM scan list 43 was not reached, at 280, then at 286 DataPtr is incremented before step 270 is repeated.

Example 13

One or both of the clients 18,20 of Figure 1 may include an application program, such as 308. An application program could, for instance, be a program that allows programming of time-based client requests for data from the server 2. The time could be set to a suitable value (*e.g.*, without limitation, every 5, 10, 15, 60 minutes). When the client, such as 18,20, receives the data, it parses it for selected data, such as, for example, voltage or energy, and saves the data to a comma separated variable CSV file readable by a program such as Microsoft® Excel. The web server 25 is preferably adapted to output the INCOM device values in a structured format 310, such as Table 11, above, to that application program 308.

Example 14

If a Modbus communication network (not shown) is employed in place of the INCOM network 14 (Figure 1), then it is believed that there is an issue of learning future new devices. Although the server (not shown) corresponding to the disclosed server 2 (Figure 1) can also learn the Modbus network, it is believed that this is limited to only those Modbus devices (not shown) that existed when such server (not shown) was last updated for the latest known Modbus devices and their register definitions. This is because it is believed that there is no register consistency across Modbus devices. One such device, for example, is a General Electric Multilin relay, which includes a register that contains a "Product ID" at addresses 0000 to 007F. See, for example, http://www.geindustrial.com/products/manuals/369/369-bf_9.pdf. Through this Product ID, the server may learn the register definitions and provide a spreadsheet (not shown) for display corresponding to the web page 42 of Figure 2.

The INCOM/IMPACC commands disclosed herein are shown in hexadecimal without the specific hexadecimal (H) designation.

While for clarity of disclosure reference has been made herein to the exemplary web page displays 42,178,180 for displaying real-time values and/or configuration information, it will be appreciated that such values and/or information may be stored, be printed on hard copy, be computer modified, or be combined with other data. All such processing shall be deemed to fall within the terms "display" or "displaying" as employed herein.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

**Claims**

1. A server comprising:

   a first transceiver adapted to communicate with a first communication network;
   a second transceiver adapted to communicate with a second communication network including a plurality of communicating devices; and
   a processor cooperating with said first and second transceivers, said processor being adapted to learn at least some of said communicating devices from said second communication network, to repetitively obtain a plurality of values from said at least some of said communicating devices of said second communication network, to associate said values with a web page, to communicate said web page to a remote client over said first communication network, and to repetitively communicate said values associated with said web page to said remote client over said first communication network.

2. The server of Claim 1 wherein said processor comprises a web server adapted to provide said web page and said values in a spreadsheet format to a web browser of said remote client.

3. The server of Claim 1 wherein said second communication network is an INCOM network; and wherein said second transceiver is an INCOM transceiver adapted to communicate over said INCOM network.

4. The server of Claim 3 wherein one of said communicating devices is adapted to communicate with an INCOM sub-network including a plurality of communicating devices; and wherein said processor comprises a routine adapted to learn said at least some of said communicating devices from said second communication network including said one of said communicating devices and at least some of said communicating devices of said INCOM sub-network.

5. The server of Claim 1 wherein said first communication network is the Internet; and wherein said first transceiver is an Ethernet transceiver which is adapted to communicate over said Internet.

6. The server of Claim 1 wherein said communicating devices are selected from the group consisting of an electrical interrupting device, a digital meter, a motor overload relay, a monitoring unit and an electrical distribution product.

7. The server of Claim 1 wherein said processor is further adapted to repetitively obtain said values from said second communication network and to repetitively communicate said values over said first communication network in real-time.

8. The server of Claim 1 wherein said web page includes said values in a spreadsheet format.

9. The server of Claim 1 wherein said processor comprises a routine adapted to automatically learn said at least some of said communicating devices from said second communication network.

10. The server of Claim 1 wherein said processor is further adapted to periodically obtain said values from said second communication network.

11. The server of Claim 10 wherein said processor is further adapted to update said values from said second communication network in real-time.

12. The server of Claim 1 wherein said processor is further adapted to periodically communicate said values over said first communication network.

13. The server of Claim 12 wherein said processor is further adapted to update said values over said first communication network in real-time.

14. The server of Claim 1 wherein said processor comprises a first routine adapted to accept a plurality of limits for at least some of said values, and a second routine adapted to compare each of said at least some of said values to a corresponding one of said limits in order to limit check said at least some of said values.

15. The server of Claim 14 wherein said processor further comprises a third routine adapted to send an e-mail message over said first communication network responsive to a corresponding one of said at least some of said values traversing a corresponding one of said limits.

16. The server of Claim 14 wherein said processor is adapted to provide said web page and said values in a spreadsheet format to said remote client; and wherein said processor further comprises a third routine adapted to annunciate an alarm responsive to a corresponding one of said at least some of said values traversing a corresponding one of said limits or being equal to a predetermined state.

17. A system comprising:

a first communication network including a client;
a second communication network including a plurality of communicating devices; and
a server comprising:

a first transceiver communicating with said first communication network,
a second transceiver communicating with said second communication network and said plurality of communicating devices, and
a processor cooperating with said first and second transceivers, said processor being adapted to learn at least some of said communicating devices of said second communication network, to repetitively obtain a plurality of values from said at least some of said communicating devices of said second communication network, to associate said values with a web page, to communicate said web page to said client over said first communication network, and to repetitively communicate said values associated with said web page to said client over said first communication network.

18. The system of Claim 17 wherein said web page includes said values in a spreadsheet format.

19. The system of Claim 18 wherein said client comprises a web browser; and wherein said processor comprises a web server adapted to provide said spreadsheet format to the web browser of said client.

20. The system of Claim 17 wherein said client further comprises an application program; and wherein said web server is adapted to output said values in a structured format to said application program.

*FIG.1*

EP 1 708 460 A1

| INCOM ADDRESS | DEVICE STATUS | I(A) (AMPS) | I(B) (AMPS) | I(C) (AMPS) | I(X) (AMPS) | V(AB) (VOLTS) | V(BC) (VOLTS) | V(CA) (VOLTS) | THD(A) % | THD(B) % | THD(C) % | POWER (kW) | POWER FACTOR | ENERGY (kWH) |
|---|---|---|---|---|---|---|---|---|---|---|---|---|---|---|
| 001 | CLOSED | 411 | 413 | 412 | 0 | -- | -- | -- | -- | -- | -- | 338 | 1.00 | 34908 |
| 002 | CLOSED | 846 | 846 | 846 | 0 | 478 | 479 | 478 | 3 | 4 | 3 | 705 | 1.00 | 3548489 |
| 003 | OPEN | 0 | 0 | 0 | 0 | 457 | 459 | 461 | -- | -- | -- | 0 | -- | 617732 |
| 004 | CLOSED | 766 | 752 | 758 | 48 | 5192 | 5192 | 5235 | 3 | 3 | 4 | 6850 | 1.00 | 3731881 |
| 006.001 | CLOSED | 0 | 0 | 0 | 0 | 0 | 0 | 0 | -- | -- | -- | 0 | 1.00 | 795 |
| APT 106B | CLOSED | 0 | 0 | 0 | 0 | 0 | 0 | 0 | -- | -- | -- | 0 | 1.00 | 691 |
| 006.005 | CLOSED | 0 | 0 | 0 | 0 | 0 | 0 | 0 | -- | -- | -- | 0 | 1.00 | 1018962 |
| MAIN | CLOSED | 0 | 0 | 0 | 7 | -- | -- | -- | -- | -- | -- | -- | -- | -- |

ADDRESS/NAME

DEVICE CONFIGURATION

*FIG.2*

100    2

88    90    92    94

*FIG.3*

96

100    2

88    90    92    94

*FIG.5*

FIG.4

*FIG.6*

RESET —114

INITIALIZE PCB
HARDWARE,
MEMORY AND
VARIABLES —116

READ IP CONFIGURATION
FROM NONVOLATILE MEMORY —118

120

INTEGRITY AND
DHCP STATUS PRIOR
TO RESET?

SAVED CONFIGURATION
IS VALID AND DHCP
WAS DISABLED

SAVED CONFIGURATION
IS INVALID OR DHCP
WAS ENABLED

DISABLE
DHCP

ENABLE
DHCP

122

124

READ MAC ADDRESS
FROM NONVOLATILE MEMORY —126

128

Y   INTEGRITY?   N

130— SET
MACADDROK
FLAG

CLEAR
MACADDROK
FLAG —132

READ INCOM SCAN LIST
FROM NONVOLATILE MEMORY —134

136

Y   INTEGRITY?   N

138   43

MOVE SCAN LIST INTO RAM
CLEAR AUTOLEARNING FLAG —141

SET AUTOLEARNING FLAG   140

141

ENTER MAIN LOOP —142     <u>112</u>

146 — START MAIN LOOP

150
UPDATE ALARM
LOCKOUT TIMERS  ← Y  ONE MINUTE ELAPSED?  148

N

152  IP CONFIGURING ?  Y

N

156
SERVICE WEB PAGE REQUESTS BY RETRIEVING INFORMATION FROM INCOM DEVICE RECORDS AND PLACING THEM IN WEB PAGE  ← Y  MACADDROK =TRUE?  N

154

SEND THE APPROPRIATE E-MAIL BASED ON THE E-MAIL REQUEST  —158

164
EXECUTE INCOM MAIN NETWORK OR SUB-NETWORK SCAN SUBROUTINE TO RETRIEVE DEVICE INFORMATION FOR WEB PAGE DISPLAY

Y  AUTOLEARNING =TRUE?  N  →  36

160

162
EXECUTE AUTO LEARNING SUBROUTINE TO QUERY DEVICES AND ADD TO SCAN LIST  —34

43

PERFORM LIMIT-CHECKING ON THE NEW DATA

168

170 —  EXECUTE E-MAIL MANAGER TO GENERATE THE APPROPRIATE E-MAIL REQUEST BASED ON THE TEST E-MAIL REQUEST AND ALARM LIMIT REQUESTS

144

*FIG.7*  172 —  SERVICE SERIAL PORT CONFIGURATION TOOL

FIG.8A

*FIG.8B*

_178_

| INCOM DEVICE LIST | | 242 | |
|---|---|---|---|
| ADDRESS | TYPE | NAME | ACTION |
| 001 | OPTIM 1050 | | VIEW/EDIT |
| 002 | DIGITRIP 1150 | 238 | VIEW/EDIT |
| 003 | DIGITRIP 1150 | | VIEW/EDIT |
| 004 | DIGITRIP 1150 | | VIEW/EDIT |
| 006.001 | DIGITRIP 1150 | | VIEW/EDIT |
| 006.002 | DIGITRIP 1150 | APT 106B | VIEW/EDIT |
| 006.005 | DIGITRIP 1150 | | VIEW/EDIT |
| 009 | ADVANTAGE ACM | MAIN | VIEW/EDIT |
| --- | --- | | ADD |

240
250
244

| 184 | 186 |
|---|---|
| PASSWORD [        ] | ENTER |

AUTODETECT INCOM DEVICE LIST
188
CONFIGURE E-MAIL
EXIT      176
248

*FIG.9*

_180_      255

NAME [                    ]      252
SUB-NETWORK MASTER ADDRESS [000]      254      256
DEVICE ADDRESS [001]   DEVICE TYPE OPTIM 1050

| PARAMETER | VALUE | DISPLAY BACKGROUND | SEND E-MAIL | 264 |
|---|---|---|---|---|
| OPEN/INACTIVE | | RED ▼ | ☐ | |
| CLOSED/ACTIVE | | DEFAULT ▼ | 262 ☐ | |
| TRIPPED | | DEFAULT ▼ | ☐ | |
| ALARM | | DEFAULT ▼ | ☐ | |
| IMAX | 412.00 | RED ▼ | ☐ | |
| VMAX | --- | DEFAULT ▼ | ☐ | |
| VMIN | --- | DEFAULT ▼ | ☐ | |
| THD | --- | DEFAULT ▼ | ☐ | |
| POWER | 320.00 | YELLOW ▼ | ☐ | |
| PF | --- | DEFAULT ▼ | ☐ | |

258
260

SAVE   REMOVE DEVICE   EXIT WITHOUT SAVING
174   182   266

*FIG.10*

```
                           268 ─( START )

                                  ↓
              ┌─────────────────────────────┐
              │  GET ADDRESS REFERENCED      │
         270 ─│  BY DATAPTR FROM THE         │
              │  SCAN LIST                   │
              └─────────────────────────────┘
                                  ↓
                       ◇─────────────────────◇  ─ 272
                  N   ╱   ADDRESS IS          ╲
              ◁──────  ON THE MAIN INCOM NETWORK
                      ╲   OR SUB-NETWORK      ╱
                       ╲        ?            ╱
                        ◇───────────────────◇
                                  ↓ Y
                       ┌──────────────────┐
                       │ RETRIEVE THE DEVICE │ ─ 274
                       │   INFORMATION    │
                       └──────────────────┘
                                  ↓
                    ┌────────────────────────┐
                    │  STORE THE INFORMATION │
                    │ IN THE RECORD REFERENCED│ ─ 276
                    │      BY DATAPTR        │
                    └────────────────────────┘
                                  ↓
   36                ┌──────────────────────┐
                     │ INCREMENT DEVCOUNT   │ ─ 278
                     └──────────────────────┘
                                  ↓
                       ◇─────────────────◇  ─ 280
                  Y   ╱     WAS           ╲
              ◁──────  THIS THE LAST
                      ╲  DEVICE IN THE    ╱
                       ╲  SCAN LIST?     ╱
                        ◇───────────────◇
                                  ↓ N
   282                  ┌──────────────────┐
     ┌───────────────┐  │ INCREMENT DATAPTR│ ─ 286
     │ REINITIALIZE: │  └──────────────────┘
     │  DEVCOUNT =0  │
     │ DATAPTR =ADDRESS OF
     │ FIRST STRUCTURE
     └───────────────┘
             ↓
      284 ─│EXIT│
```

## FIG.11

**European Patent Office**

**EUROPEAN SEARCH REPORT**

Application Number

EP 06 00 6184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/01366 A (TELEMONITOR, INC; JOHNSON, ROBERT, N; SMITH, RONALD, D; SMITH, CHARLOT) 4 January 2001 (2001-01-04) <br> * page 3, line 10 - line 16 * <br> * page 5, line 4 - line 14 * <br> * page 8, line 22 - line 29 * <br> * page 21, line 28 - page 22, line 31 * <br> * page 26, line 7 - line 25 * | 1,2,5-8, 10-20 | INV. H04L29/08 |
| Y | * figures 1,2,8 * | 3,4,9 | |
| X | US 2002/078161 A1 (CHENG DOREEN YINING) 20 June 2002 (2002-06-20) <br> * paragraph [0009] * <br> * paragraph [0024] - paragraph [0031] * <br> * paragraph [0033] - paragraph [0037] * <br> * paragraph [0052] - paragraph [0057] * <br> * paragraph [0069] - paragraph [0072] * | 1,2,5-8, 10-20 | |
| X | US 2001/032273 A1 (CHENG DOREEN YINING) 18 October 2001 (2001-10-18) <br> * paragraph [0036] * <br> * paragraph [0041] - paragraph [0049] * <br> * paragraph [0052] * | 1,2,5-8, 10-20 | TECHNICAL FIELDS SEARCHED (IPC) <br><br> H04L <br> G05B |
| Y | US 2004/204075 A1 (RUSNAK MARK FREDERICK ET AL) 14 October 2004 (2004-10-14) <br> * paragraph [0010] * <br> * paragraph [0052] * <br> * paragraph [0057] * | 3,4,9 | |
| A | * paragraph [0062] * | 1,2,5-8, 10-20 | |
| A | EP 0 964 325 A (NELES FIELD CONTROLS OY; METSO FIELD SYSTEMS OY) 15 December 1999 (1999-12-15) <br> * paragraph [0004] * <br> * paragraph [0012] * <br> * paragraph [0026] * | 1-20 | |

-/--

The present search report has been drawn up for all claims

| Place of search | Date of completion of the search | Examiner |
|---|---|---|
| Munich | 19 July 2006 | Cankaya, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\.................................................................
& : member of the same patent family, corresponding document

EPO FORM 1503 03.82 (P04C01)

**European Patent Office**

**EUROPEAN SEARCH REPORT**

Application Number

EP 06 00 6184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/024481 A1 (LABOURIER RAPHAEL) 5 February 2004 (2004-02-05) * paragraph [0001] * * paragraph [0005] * * paragraph [0013] * ----- | 1-20 | |
| | | | **TECHNICAL FIELDS SEARCHED (IPC)** |

The present search report has been drawn up for all claims

| Place of search | Date of completion of the search | Examiner |
|---|---|---|
| Munich | 19 July 2006 | Cankaya, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 6184

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2006

| Patent document cited in search report | | Publication date | Patent family member(s) | | Publication date |
|---|---|---|---|---|---|
| WO 0101366 | A | 04-01-2001 | NONE | | |
| US 2002078161 | A1 | 20-06-2002 | WO | 0251067 A2 | 27-06-2002 |
| US 2001032273 | A1 | 18-10-2001 | CN | 1383649 A | 04-12-2002 |
| | | | WO | 0163874 A2 | 30-08-2001 |
| | | | EP | 1190530 A2 | 27-03-2002 |
| | | | JP | 2003524247 T | 12-08-2003 |
| US 2004204075 | A1 | 14-10-2004 | AU | 2003204093 A1 | 18-12-2003 |
| | | | CA | 2429921 A1 | 29-11-2003 |
| | | | MX | PA03004768 A | 21-04-2004 |
| | | | ZA | 200304153 A | 05-04-2004 |
| EP 0964325 | A | 15-12-1999 | DE | 69902503 D1 | 19-09-2002 |
| | | | DE | 69902503 T2 | 10-04-2003 |
| | | | DE | 964325 T1 | 17-08-2000 |
| | | | FI | 981235 A | 02-12-1999 |
| | | | US | 6298377 B1 | 02-10-2001 |
| US 2004024481 | A1 | 05-02-2004 | FR | 2814260 A1 | 22-03-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4644547 A
- US 4644566 A
- US 4653073 A
- US 5315531 A
- US 5548523 A
- US 5627716 A
- US 5815364 A
- US 6055145 A
- US 5805442 A
- US 6640140 B